# EUROPEAN PATENT APPLICATION

(11) **EP 4 443 373 A1**
(43) Date of publication of application: **09.10.2024**
(21) Application number: 21965795.4
(22) Date of filing: 17.12.2021
(51) Int. Cl.: G06Q 40/04, G06Q 40/02, G06Q 40/06

(54) **METHOD FOR SUPPORTING TRANSACTION OF UNLISTED STOCKS AND UNLISTED STOCK TRANSACTION SERVER USING SAME**

(30) Priority: 29.11.2021 KR 20210167796
(71) Applicant: Kim, Yun Hee, Seoul 04732 (KR)
(72) Inventor: LEE, Sung Joo, Seoul 06294 (KR)
(74) Representative: AWA Sweden AB
(86) International application number: PCT/KR2021/019252
(87) International publication number: WO 2023/096012

(57) **Abstract**

The present invention provides a method for supporting transaction of unlisted stocks, the method comprising: (a) a step in which an unlisted stock transaction server determines a specific reference price of specific unlisted stocks regarding a specific unlisted company; (b) a step in which the unlisted stock transaction server sets limitation conditions regarding both buy orders and cell orders of the specific unlisted stocks with reference to the specific reference price of the specific unlisted stocks; and (c) a step in which the unlisted stock transaction server support transactions of the specific unlisted stocks by performing a process in which at least one specific buy order including at least one specific bid price is acquired while the range of bid prices to be included in the buy orders of the specific unlisted stocks is made to have downward rigidity with reference to the specific reference price according to a first limitation condition among the limitation conditions, and a process in which at least one specific sell order including at least one specific ask price is acquired while the range of ask prices to be included in the sell orders of the specific unlisted stocks is made to have upward rigidity with reference to the specific reference price according to a second limitation condition among the limitation conditions.

## Description

This present application claims the benefit of the earlier filing date of Korean non-provisional patent application No. 10-2021-0167796, filed on November 29, 2021, the entire contents of which being incorporated herein by reference.

The present disclosure relates to a method for supporting a transaction of unlisted stocks and an unlisted stock transaction server using the same.

Listed stocks are stocks that are listed on a stock exchange to be freely traded. As such, it is easy to find a counterparty to trade with, and company information is publicly available. In addition, a trading volume is publicly disclosed, with the trading volume itself being high, and there is a fair price which can be checked whenever needed.

On the other hand, unlisted stocks are stocks that are not listed on the stock exchange or are potential stocks where no shares are issued but only rights exist. The unlisted stocks have several disadvantages compared to the listed stocks. That is, it is harder to find the counterparty, the company information is often private, the trading volume is often private and low, and there is no way to verify the fair price, especially since there is no right price.

To summarize, trading of the unlisted stocks is extremely difficult, and even when it does occur, a price negotiation between both counterparties is inevitable.

Therefore, it is necessary to find a way to trade the unlisted stocks to satisfy both buyers and sellers, and to do so, it is necessary to understand psychological reasonings of the buyers and the sellers.

The sellers are often, but not always, in need of funds and have a strong desire to sell their shares. They also want to trade as quickly as possible and will have at least some knowledge of the company information and the fair price of their shares.

The buyers, on the other hand, have more money to spare and are not necessarily in a situation where they need to buy such shares. That is, they may have other investment alternatives, so they are more relaxed about trading than the sellers, and they may not be as familiar with the company information and the fair price of the shares they want to buy.

In such a situation where the psychological reasonings of the sellers and the buyers are different, what both the sellers and the buyers have in common is that they want to know an appropriate reference price for the unlisted stocks they want to sell or the unlisted stocks they want to buy.

In other words, in order to facilitate a transaction of the unlisted stocks, the fair price or the reference price for the unlisted stocks is required and must be available to the public. However, there are no services that appropriately provide the reference price for the unlisted stocks.

In addition, a major problem with the transaction of the unlisted stocks is that there may be price manipulations by the sellers who want to make stock prices artificially high, which often hinders trading activity and thus results in very few trades and pain for both the buyers and the sellers.

Therefore, the applicant has made great efforts to solve the above-mentioned problems of transacting these unlisted stocks.

It is an object of the present disclosure to solve all the aforementioned problems.

It is another object of the present invention to determine a specific reference price for a specific unlisted stock of a specific unlisted company.

It is still another object of the present invention to allow limitation conditions for both buy orders and sell orders of the specific unlisted stock to be set by referring to the specific reference price of the specific unlisted stock.

It is still yet another object of the present invention to support the transaction of the specific unlisted stock by acquiring at least one specific buy order including at least one specific desired bid price on condition that a range of desired bid prices to be included in the buy orders of the specific unlisted stock has been downwardly bounded based on the specific reference price according to a first limitation condition among the limitation conditions.

It is still yet another object of the present invention to support the transaction of the specific unlisted stock by acquiring at least one specific sell order including at least one specific desired ask price on condition that a range of desired ask prices to be included in the sell orders of the specific unlisted stock has been upwardly bounded based on the specific reference price according to a second limitation condition among the limitation conditions.

It is still yet another object of the present invention to display the specific reference price for the specific unlisted stock of the specific unlisted company in a first region of a screen of a user device.

It is still yet another object of the present invention to display, in a second region of the screen of the user device, the specific buy order including the specific desired bid price on condition that the range of desired bid prices to be included in the buy orders of the specific unlisted stock has been downwardly bounded based on the specific reference price according to the first limitation condition.

It is still yet another object of the present invention to display, in a third region of the screen of the user device, the specific sell order including the specific desired ask price on condition that the range of the desired ask prices to be included in the sell orders of the specific unlisted stock has been upwardly bounded based on the specific reference price according to the second limitation condition.

In order to accomplish objects above and characteristic effects to be described later of the present disclosure, distinctive structures of the present disclosure are described as follows.

In accordance with one aspect of the present disclosure there is provided a method of supporting a transaction of unlisted stocks, including steps of: (a) determining, by an unlisted stock transaction server, a specific reference price of a specific unlisted stock of a specific unlisted company; (b) setting, by the unlisted stock transaction server, limitation conditions for both buy orders and sell orders corresponding to the specific unlisted stock by referring to the specific reference price of the specific unlisted stock; and (c) (i) on condition that a range of desired bid prices to be included in the buy orders of the specific unlisted stock has been downwardly bounded based on the specific reference price according to a first limitation condition among the limitation conditions, acquiring, by the unlisted stock transaction server, at least one specific buy order including at least one specific desired bid price and (ii) on condition that a range of desired ask prices to be included in the sell orders of the specific unlisted stock has been upwardly bounded based on the specific reference price according to a second limitation condition among the limitation conditions, acquiring, by the unlisted stock transaction server, at least one specific sell order including at least one specific desired ask price.

As one example, at the step of (a), the specific reference price is determined by referring to at least part of (i) specific past investment information which includes one or more investments received by the specific unlisted company, (ii) specific expected investment information which includes one or more investments expected to be received by the specific unlisted company, (iii) other past investment information which includes one or more investments received by one or more other unlisted companies in a same industry as the specific unlisted company, (iv) other expected investment information which includes one or more investments expected to be received by the one or more other unlisted companies in the same industry as the specific unlisted company, (v) market capitalization of one or more other listed companies in the same industry as the specific unlisted company, and (vi) a specific company evaluation result of the specific unlisted company conducted by an accounting firm or gathered based on a guideline provided by a government body.

As one example, at the step of (a), the specific past investment information is determined by referring to at least part of first specific past investment information to n-th specific past investment information, and is correlated with a first specific past weight to an n-th specific past weight corresponding to the first specific past investment information to the n-th specific past investment information, wherein the specific expected investment information is determined by referring to at least part of the first specific past investment information to the n-th specific past investment information and first specific past investment time information to n-th specific past investment time information corresponding to the first specific past investment information to the n-th specific past investment information, and is correlated with the first specific past weight to the n-th specific past weight corresponding to the first specific past investment information to the n-th specific past investment information, wherein said other past investment information is determined by referring to at least part of first other past investment information to m-th other past investment information, which are in chronological order, and is correlated with a first other past weight to an m-th other past weight corresponding to the first other past investment information to the m-th other past investment information, and wherein said other expected investment information is determined by referring to at least part of the first other past investment information to the m-th other past investment information and first other past investment time information to m-th other past investment time information corresponding to the first other past investment information to the m-th other past investment information, and is correlated with the first other past weight to the m-th other past weight corresponding to the first other past investment information to the m-th other past investment information.

As one example, at the step of (c), the specific unlisted stock is allowed to be transacted by matching at least part of a specific desired bid quantity included in the specific buy order with at least part of a specific desired ask quantity included in the specific sell order, wherein, in case the specific unlisted stock is allowed to be transacted under a first mode which does not require a quantity match between the specific desired bid quantity and the specific desired ask quantity, the unlisted stock transaction server operates under one of a (1_1)-st mode in which the specific sell order is acquired while only the specific buy order exists, a (1_2)-nd mode in which the specific buy order is acquired while only the specific sell order exists, and a (1_3)-rd mode in which none of the specific buy order and the specific sell order is acquired, wherein, (i) in the (1_1)-st mode, (i-1) in response to the specific desired bid quantity being greater than the specific desired ask quantity, a transaction of the specific desired ask quantity is allowed to be executed and information on the specific buy order is updated to be a (1_1_A)-th quantity which is acquired by subtracting the specific desired ask quantity from the specific desired bid quantity, and then the (1_1)-st mode is maintained, and (i-2) in response to the specific desired ask quantity being greater than the specific desired bid quantity, a transaction of the specific desired bid quantity is allowed to be executed and information on the specific sell order is updated to be a (1_1_B)-th quantity which is acquired by subtracting the specific desired bid quantity from the specific desired ask quantity, and then the (1_1)-st mode is switched to the (1_2)-nd mode, (ii) in the (1_2)-nd mode, (ii-1) in response to the specific desired ask quantity being greater than the specific desired bid quantity, a transaction of the specific desired bid quantity is allowed to be executed and information on the specific sell order is updated to be a (1_2_A)-th quantity which is acquired by subtracting the specific desired bid quantity from the specific desired ask quantity, and then the (1_2)-nd mode is maintained, and (ii-2) in response to the specific desired bid quantity being greater than the specific desired ask quantity, a transaction of the specific desired ask quantity is allowed to be executed and information on the specific buy order is updated to be a (1_2_B)-th quantity which is acquired by subtracting the specific desired ask quantity from the specific desired bid quantity, and then the (1_2)-nd mode is switched to the (1_1)-st mode, and (iii) in the (1_3)-rd mode, in response to acquiring the specific buy order, the (1_3)-rd mode is switched to the (1_1)-st mode, and in response to acquiring the specific sell order, the (1_3)-rd mode is switched to the (1_2)-nd mode.

As one example, at the step of (c), the specific buy order includes at least part of a first specific buy order to an n-th specific buy order, and the specific sell order includes at least part of a first specific sell order to an m-th specific sell order, wherein the specific unlisted stock is allowed to be transacted by matching at least part of a first specific desired bid quantity to an n-th specific desired bid quantity included in the first specific buy order to the n-th specific buy order with at least part of a first specific desired ask quantity to an m-th specific desired ask quantity included in the first specific sell order to the m-th specific sell order, wherein, in case the specific unlisted stock is allowed to be transacted under a second mode which requires a quantity match between at least part of the first specific desired bid quantity to the n-th specific desired bid quantity and at least part of the first specific desired ask quantity to the m-th specific desired ask quantity, the unlisted stock transaction server operates under one of a (2_1)-st mode in which the specific sell order is acquired while only the specific buy order exists, a (2_2)-nd mode in which the specific buy order is acquired while only the specific sell order exists, a (2_3)-rd mode in which both the specific sell order and the specific buy order are acquired, and a (2_4)-th mode in which none of the specific buy order and the specific sell order are acquired, wherein, (i) in the (2_1)-st mode, on condition that the first specific buy order to the n-th specific buy order exist, in response to acquiring a k-th specific sell order including a k-th specific desired ask quantity, wherein k is an integer greater than or equal to 1 and less than or equal to n, (i-1) in case a quantity match of the k-th specific desired ask quantity exists among the first specific desired bid quantity to the n-th specific desired bid quantity, a transaction of the k-th specific desired ask quantity is allowed to be executed, and then in case a (2_1)-st quantity which is acquired by subtracting the k-th specific desired ask quantity from a sum of the first specific desired bid quantity to the n-th specific desired bid quantity is greater than 0, the (2_1)-st mode is maintained, and in case the (2_1)-st quantity is equal to 0, the (2_1)-st mode is switched to the (2_4)-th mode, (i-2) in response to a quantity match of the k-th specific desired ask quantity not existing among the first specific desired bid quantity to the n-th specific desired bid quantity, the (2_1)-st mode is switched to the (2_3)-rd mode without allowing any transaction between the first specific buy order to the n-th specific buy order and the k-th specific sell order to be executed, (ii) in the (2_2)-nd mode, on condition that the first specific sell order to the m-th specific sell order exist, in response to acquiring a k-th specific buy order including a k-th specific desired bid quantity, wherein k is an integer greater than or equal to 1 and less than or equal to m, (ii-1) in case a quantity match of the k-th specific desired bid quantity exists among the first specific desired ask quantity to the m-th specific desired ask quantity, a transaction of the k-th specific desired bid quantity is allowed to be executed, and then in case a (2_2)-nd quantity which is acquired by subtracting the k-th specific desired bid quantity from a sum of the first specific desired sell quantity to the n-th specific desired sell quantity is greater than 0, the (2_2)-nd mode is maintained, and in case the (2_2)-nd quantity is equal to 0, the (2_2)-nd mode is switched to the (2_4)-th mode, and (ii-2) in case a quantity match of the k-th specific desired bid quantity does not exist among the first specific desired sell quantity to the n-th specific desired sell quantity, the (2_2)-nd mode is switched to the (2_3)-rd mode without allowing any transaction between the first specific sell order to the m-th specific sell order and the k-th specific buy order to be executed, (iii) in the (2_3)-rd mode, (iii-1) in case a partial quantity match between one of the first specific desired ask quantity to the m-th specific desired ask quantity and one of the first specific desired bid quantity and the n-th specific desired bid quantity exists, the (2_3)-rd mode is maintained, and (iii-2) in case a quantity match between all the first specific desired ask quantity to the m-th specific desired ask quantity and all the first specific desired bid quantity and the n-th specific desired bid quantity exists, the (2_3)-rd mode is switched to the (2_4)-th mode, and (iv) in the (2_4)-th mode, in response to acquiring the k-th specific buy order, the (2_4)-th mode is switched to the (2_1)-st mode and in response to acquiring the k-th specific sell order, the (2_4)-th mode is switched to the (2_2)-nd mode.

As one example, at the step of (c), in response to acquiring the specific buy order from a buyer device, the unlisted stock transaction server requests the buyer device to deposit a deposit amount calculated by multiplying specific desired bid quantity included in the specific buy order with the specific reference price into an escrow account, and in response to detecting that the deposit amount is deposited into the escrow account, the unlisted stock transaction server registers the specific buy order.

As one example, at the step of (c), in response to acquiring the specific sell order from a seller device and determining that the specific buy order and the specific sell order match with each other, the unlisted stock transaction server transfers the deposit amount deposited into the escrow account to a seller account interworked with the seller device, and changes an ownership of the specific unlisted stock to the seller, to thereby support the transaction of the specific unlisted stock.

As one example, at the step of (c), in response to acquiring the specific buy order from a buyer device, the unlisted stock transaction server suspends withdrawal of a buyer account for an ordered amount calculated by multiplying the specific desired bid quantity included in the specific buy order with the specific reference price, and wherein, in response to acquiring the specific sell order from a seller device and determining that the specific sell order matches with the specific buy order, the unlisted stock transaction server transfers the ordered amount that was suspended from withdrawal to a seller account interworked with the seller device and changes an ownership of the specific unlisted stock to the buyer, to thereby support the transaction of the specific unlisted stock.

As one example, at the step of (c), in response to acquiring the specific sell order from a seller device, the unlisted stock transaction server requests the seller device to confirm that a specific desired ask quantity, included in the specific sell order, of the specific unlisted stock actually exists, and in response to confirming that the specific desired ask quantity of the specific unlisted stock exists, the unlisted stock transaction server registers the sell order.

As one example, at the step of (c), in response to acquiring the specific sell order from the seller device, the unlisted stock transaction server confirms that the specific desired ask quantity, included in the specific sell order, of the specific unlisted stock actually exists, and the unlisted stock transaction server blocks any transaction of the specific desired ask quantity of the specific unlisted stock until a transaction is executed by a match between the specific sell order and the specific buy order or until a cancellation of the specific sell order.

As one example, at the step of (c), the unlisted stock transaction server supports the transaction of the specific unlisted stock by performing processes of: (i) on condition that a minimum value of the range of the desired bid prices to be included in the buy orders of the specific unlisted stock is downwardly bounded based on a first specific adjusted reference price which is calculated by multiplying the specific reference price with a first adjustment factor according to the first limitation condition, acquiring the specific buy order including the specific desired bid price and (ii) on condition that a maximum value of the range of the desired ask prices to be included in the sell orders of the specific unlisted stock is upwardly bounded based on a second specific adjusted reference price which is calculated by multiplying the specific reference price with a second adjustment factor, according to the second limitation condition, acquiring the specific sell order including the specific desired ask price.

As one example, at the step of (b), on condition that at least one of the first adjustment factor and the second adjustment factor is set as 1.0, the unlisted stock transaction server sets the first limitation condition and the second limitation condition.

In accordance with another aspect of the present disclosure there is provided an unlisted stock transaction server for supporting a transaction of unlisted stocks, including: at least one memory that stores instructions; and at least one processor configured to execute the instructions to perform processes of (I) determining a specific reference price of a specific unlisted stock of a specific unlisted company; (II) setting limitation conditions for both buy orders and sell orders corresponding to the specific unlisted stock by referring to the specific reference price of the specific unlisted stock; and (III) (i) on condition that a range of desired bid prices to be included in the buy orders of the specific unlisted stock has been downwardly bounded based on the specific reference price according to a first limitation condition among the limitation conditions, acquiring at least one specific buy order including at least one specific desired bid price and (ii) on condition that a range of desired ask prices to be included in the sell orders of the specific unlisted stock has been upwardly bounded based on the specific reference price according to a second limitation condition among the limitation conditions, acquiring at least one specific sell order including at least one specific desired ask price.

As one example, at the process of (I), the specific reference price is determined by referring to at least part of (i) specific past investment information which includes one or more investments received by the specific unlisted company, (ii) specific expected investment information which includes one or more investments expected to be received by the specific unlisted company, (iii) other past investment information which includes one or more investments received by one or more other unlisted companies in a same industry as the specific unlisted company, (iv) other expected investment information which includes one or more investments expected to be received by the one or more other unlisted companies in the same industry as the specific unlisted company, (v) market capitalization of one or more other listed companies in the same industry as the specific unlisted company, and (vi) a specific company evaluation result of the specific unlisted company conducted by an accounting firm or gathered based on a guideline provided by a government body.

As one example, at the process of (I), the specific past investment information is determined by referring to at least part of first specific past investment information to n-th specific past investment information, and is correlated with a first specific past weight to an n-th specific past weight corresponding to the first specific past investment information to the n-th specific past investment information, wherein the specific expected investment information is determined by referring to at least part of the first specific past investment information to the n-th specific past investment information and first specific past investment time information to n-th specific past investment time information corresponding to the first specific past investment information to the n-th specific past investment information, and is correlated with the first specific past weight to the n-th specific past weight corresponding to the first specific past investment information to the n-th specific past investment information, wherein said other past investment information is determined by referring to at least part of first other past investment information to m-th other past investment information, which are in chronological order, and is correlated with a first other past weight to an m-th other past weight corresponding to the first other past investment information to the m-th other past investment information, and wherein said other expected investment information is determined by referring to at least part of the first other past investment information to the m-th other past investment information and first other past investment time information to m-th other past investment time information corresponding to the first other past investment information to the m-th other past investment information, and is correlated with the first other past weight to the m-th other past weight corresponding to the first other past investment information to the m-th other past investment information.

As one example, at the process of (III), the specific unlisted stock is allowed to be transacted by matching at least part of a specific desired bid quantity included in the specific buy order with at least part of a specific desired ask quantity included in the specific sell order, wherein, in case the specific unlisted stock is allowed to be transacted under a first mode which does not require a quantity match between the specific desired bid quantity and the specific desired ask quantity, the processor operates under one of a (1_1)-st mode in which the specific sell order is acquired while only the specific buy order exists, a (1_2)-nd mode in which the specific buy order is acquired while only the specific sell order exists, and a (1_3)-rd mode in which none of the specific buy order and the specific sell order is acquired, wherein, (i) in the (1_1)-st mode, (i-1) in response to the specific desired bid quantity being greater than the specific desired ask quantity, a transaction of the specific desired ask quantity is allowed to be executed and information on the specific buy order is updated to be a (1_1_A)-th quantity which is acquired by subtracting the specific desired ask quantity from the specific desired bid quantity, and then the (1_1)-st mode is maintained, and (i-2) in response to the specific desired ask quantity being greater than the specific desired bid quantity, a transaction of the specific desired bid quantity is allowed to be executed and information on the specific sell order is updated to be a (1_1_B)-th quantity which is acquired by subtracting the specific desired bid quantity from the specific desired ask quantity, and then the (1_1)-st mode is switched to the (1_2)-nd mode, (ii) in the (1_2)-nd mode, (ii-1) in response to the specific desired ask quantity being greater than the specific desired bid quantity, a transaction of the specific desired bid quantity is allowed to be executed and information on the specific sell order is updated to be a (1_2_A)-th quantity which is acquired by subtracting the specific desired bid quantity from the specific desired ask quantity, and then the (1_2)-nd mode is maintained, and (ii-2) in response to the specific desired bid quantity being greater than the specific desired ask quantity, a transaction of the specific desired ask quantity is allowed to be executed and information on the specific buy order is updated to be a (1_2_B)-th quantity which is acquired by subtracting the specific desired ask quantity from the specific desired bid quantity, and then the (1_2)-nd mode is switched to the (1_1)-st mode, and (iii) in the (1_3)-rd mode, in response to acquiring the specific buy order, the (1_3)-rd mode is switched to the (1_1)-st mode, and in response to acquiring the specific sell order, the (1_3)-rd mode is switched to the (1_2)-nd mode.

As one example, at the process of (III), the specific buy order includes at least part of a first specific buy order to an n-th specific buy order, and the specific sell order includes at least part of a first specific sell order to an m-th specific sell order, wherein the specific unlisted stock is allowed to be transacted by matching at least part of a first specific desired bid quantity to an n-th specific desired bid quantity included in the first specific buy order to the n-th specific buy order with at least part of a first specific desired ask quantity to an m-th specific desired ask quantity included in the first specific sell order to the m-th specific sell order, wherein, in case the specific unlisted stock is allowed to be transacted under a second mode which requires a quantity match between at least part of the first specific desired bid quantity to the n-th specific desired bid quantity and at least part of the first specific desired ask quantity to the m-th specific desired ask quantity, the processor operates under one of a (2_1)-st mode in which the specific sell order is acquired while only the specific buy order exists, a (2_2)-nd mode in which the specific buy order is acquired while only the specific sell order exists, a (2_3)-rd mode in which both the specific sell order and the specific buy order are acquired, and a (2_4)-th mode in which none of the specific buy order and the specific sell order are acquired, wherein, (i) in the (2_1)-st mode, on condition that the first specific buy order to the n-th specific buy order exist, in response to acquiring a k-th specific sell order including a k-th specific desired ask quantity, wherein k is an integer greater than or equal to 1 and less than or equal to n, (i-1) in case a quantity match of the k-th specific desired ask quantity exists among the first specific desired bid quantity to the n-th specific desired bid quantity, a transaction of the k-th specific desired ask quantity is allowed to be executed, and then in case a (2_1)-st quantity which is acquired by subtracting the k-th specific desired ask quantity from a sum of the first specific desired bid quantity to the n-th specific desired bid quantity is greater than 0, the (2_1)-st mode is maintained, and in case the (2_1)-st quantity is equal to 0, the (2_1)-st mode is switched to the (2_4)-th mode, (i-2) in response to a quantity match of the k-th specific desired ask quantity not existing among the first specific desired bid quantity to the n-th specific desired bid quantity, the (2_1)-st mode is switched to the (2_3)-rd mode without allowing any transaction between the first specific buy order to the n-th specific buy order and the k-th specific sell order to be executed, (ii) in the (2_2)-nd mode, on condition that the first specific sell order to the m-th specific sell order exist, in response to acquiring a k-th specific buy order including a k-th specific desired bid quantity, wherein k is an integer greater than or equal to 1 and less than or equal to m, (ii-1) in case a quantity match of the k-th specific desired bid quantity exists among the first specific desired ask quantity to the m-th specific desired ask quantity, a transaction of the k-th specific desired bid quantity is allowed to be executed, and then in case a (2_2)-nd quantity which is acquired by subtracting the k-th specific desired bid quantity from a sum of the first specific desired sell quantity to the n-th specific desired sell quantity is greater than 0, the (2_2)-nd mode is maintained, and in case the (2_2)-nd quantity is equal to 0, the (2_2)-nd mode is switched to the (2_4)-th mode, and (ii-2) in case a quantity match of the k-th specific desired bid quantity does not exist among the first specific desired sell quantity to the n-th specific desired sell quantity, the (2_2)-nd mode is switched to the (2_3)-rd mode without allowing any transaction between the first specific sell order to the m-th specific sell order and the k-th specific buy order to be executed, (iii) in the (2_3)-rd mode, (iii-1) in case a partial quantity match between one of the first specific desired ask quantity to the m-th specific desired ask quantity and one of the first specific desired bid quantity and the n-th specific desired bid quantity exists, the (2_3)-rd mode is maintained, and (iii-2) in case a quantity match between all the first specific desired ask quantity to the m-th specific desired ask quantity and all the first specific desired bid quantity and the n-th specific desired bid quantity exists, the (2_3)-rd mode is switched to the (2_4)-th mode, and (iv) in the (2_4)-th mode, in response to acquiring the k-th specific buy order, the (2_4)-th mode is switched to the (2_1)-st mode and in response to acquiring the k-th specific sell order, the (2_4)-th mode is switched to the (2_2)-nd mode.

As one example, at the process of (III), in response to acquiring the specific buy order from a buyer device, the processor requests the buyer device to deposit a deposit amount calculated by multiplying specific desired bid quantity included in the specific buy order with the specific reference price into an escrow account, and in response to detecting that the deposit amount is deposited into the escrow account, the processor registers the specific buy order.

As one example, at the process of (III), in response to acquiring the specific sell order from a seller device and determining that the specific buy order and the specific sell order match with each other, the processor transfers the deposit amount deposited into the escrow account to a seller account interworked with the seller device, and changes an ownership of the specific unlisted stock to the seller, to thereby support the transaction of the specific unlisted stock.

As one example, at the process of (III), in response to acquiring the specific buy order from a buyer device, the processor suspends withdrawal of a buyer account for an ordered amount calculated by multiplying the specific desired bid quantity included in the specific buy order with the specific reference price, and wherein, in response to acquiring the specific sell order from a seller device and determining that the specific sell order matches with the specific buy order, the processor transfers the ordered amount that was suspended from withdrawal to a seller account interworked with the seller device and changes an ownership of the specific unlisted stock to the buyer, to thereby support the transaction of the specific unlisted stock.

As one example, at the process of (III), in response to acquiring the specific sell order from a seller device, the processor requests the seller device to confirm that a specific desired ask quantity, included in the specific sell order, of the specific unlisted stock actually exists, and in response to confirming that the specific desired ask quantity of the specific unlisted stock exists, the processor registers the sell order.

As one example, at the process of (III), in response to acquiring the specific sell order from the seller device, the processor confirms that the specific desired ask quantity, included in the specific sell order, of the specific unlisted stock actually exists, and the processor blocks any transaction of the specific desired ask quantity of the specific unlisted stock until a transaction is executed by a match between the specific sell order and the specific buy order or until a cancellation of the specific sell order.

As one example, at the process of (III), the processor supports the transaction of the specific unlisted stock by performing processes of: (i) on condition that a minimum value of the range of the desired bid prices to be included in the buy orders of the specific unlisted stock is downwardly bounded based on a first specific adjusted reference price which is calculated by multiplying the specific reference price with a first adjustment factor according to the first limitation condition, acquiring the specific buy order including the specific desired bid price and (ii) on condition that a maximum value of the range of the desired ask prices to be included in the sell orders of the specific unlisted stock is upwardly bounded based on a second specific adjusted reference price which is calculated by multiplying the specific reference price with a second adjustment factor, according to the second limitation condition, acquiring the specific sell order including the specific desired ask price.

As one example, at the process of (II), on condition that at least one of the first adjustment factor and the second adjustment factor is set as 1.0, the processor sets the first limitation condition and the second limitation condition.

The following drawings to be used for explaining example embodiments of the present disclosure are only part of example embodiments of the present disclosure and other drawings can be acquired based on the drawings by those skilled in the art of the present disclosure without inventive work.
Fig. 1 is a drawing schematically illustrating an unlisted stock transaction server for supporting a transaction of unlisted stocks in accordance with one example embodiment of the present disclosure.
Fig. 2 is a flowchart schematically illustrating steps of a method for supporting the transaction of the unlisted stocks in accordance with one example embodiment of the present disclosure.
Figs. 3A to 3G are drawings schematically illustrating the transaction under a first mode which does not require a quantity match of the unlisted stocks in accordance with one example embodiment of the present disclosure.
Figs. 4A to 4F are drawings schematically illustrating the transaction under a second mode which does require the quantity match of the unlisted stocks in accordance with one example embodiment of the present disclosure.
Fig. 5 is a drawing schematically illustrating the unlisted stock transaction server providing a UI capable of supporting the transaction of the unlisted stocks in accordance with one example embodiment of the present disclosure.
Fig. 6 is a flowchart schematically illustrating a method of providing the UI capable of supporting the transaction of the unlisted stocks in accordance with one example embodiment of the present disclosure.

Detailed explanation on the present disclosure to be made below refer to attached drawings and diagrams illustrated as specific embodiment examples under which the present disclosure may be implemented to make clear of purposes, technical solutions, and advantages of the present disclosure. These embodiments are described in sufficient detail to enable those skilled in the art to practice the present disclosure.

Besides, in the detailed description and claims of the present disclosure, a term "include" and its variations are not intended to exclude other technical features, additions, components or steps. Other objects, benefits and features of the present disclosure will be revealed to those skilled in the art, partially from the specification and partially from the implementation of the present disclosure. The following examples and drawings will be provided as examples but they are not intended to limit the present disclosure.

Moreover, the present disclosure covers all possible combinations of example embodiments indicated in this specification. It is to be understood that the various embodiments of the present disclosure, although different, are not necessarily mutually exclusive. It is to be understood that the various embodiments of the present disclosure, although different, are not necessarily mutually exclusive. In addition, it is to be understood that the position or arrangement of individual elements within each disclosed embodiment may be modified without departing from the spirit and scope of the present disclosure. In addition, it is to be understood that the position or arrangement of individual elements within each disclosed embodiment may be modified without departing from the spirit and scope of the present disclosure. In the drawings, like numerals refer to the same or similar functionality throughout the several views.

To allow those skilled in the art to the present disclosure to be carried out easily, the example embodiments of the present disclosure by referring to attached diagrams will be explained in detail as shown below.

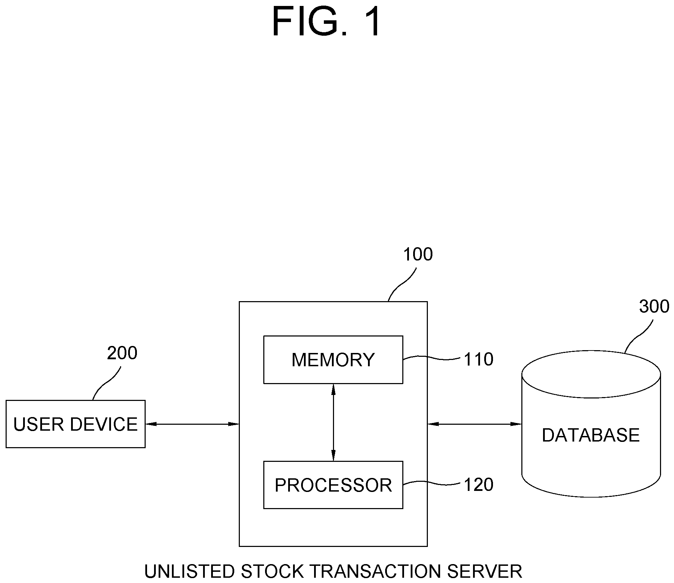

Fig. 1 is a drawing schematically illustrating an unlisted stock transaction server 100 for supporting a transaction of unlisted stocks in accordance with one example embodiment of the present disclosure.

Referring to Fig. 1, the unlisted stock transaction server 100 may include a memory 110 and a processor 120.

The memory 110 of the unlisted stock transaction server 100 may store instructions of the processor 120, more specifically, the instructions are codes generated for the purpose of instructing the unlisted stock transaction server 100 for supporting the transaction of the unlisted stocks to function in a specific manner and can be implemented in a form of executable program command through a variety of computer means recordable to computer readable media. The instructions may execute processes for performing functions described in the specification of the present disclosure.

Further, the processor 120 of the unlisted stock transaction server 100 may include hardware configuration of MPU (Micro Processing Unit) or CPU (Central Processing Unit), cache memory, data bus, etc. Additionally, any OS (operating system) and software configuration of applications that achieve specific purposes may be further included.

Furthermore, the unlisted stock transaction server 100 for supporting the transaction of the unlisted stocks may be interworked with a database 300. Herein, the database 300 may include at least one storage medium of flash memory type, hard disk type, multimedia card micro type (for example, SD or XD memory), RAM (Random Access Memory), SRAM (Static Random Access Memory), ROM (Read Only Memory), EEPROM (Electrically Erasable Programmable Read Only Memory), PROM (Programmable Read Only Memory), magnetic memory, magnetic disk, optical disk, but it is not limited thereto, and may include any medium capable of storing data. Further, depending on different settings of the present disclosure, the database 300 may be installed separately from the unlisted stock transaction server 100, or may be installed within the unlisted stock transaction server 100 to transmit and record data, and may also be implemented separately into two or more DBs, contrary to the illustration.

Furthermore, the unlisted stock transaction server 100 for supporting the transaction of the unlisted stocks may be interworked with a user device 200. Herein, the user device 200 may be a phone of a user, but it is not limited thereto. Herein, there may be more than one user devices 200. The present disclosure will only consider one user device 200, however, the scope of the present invention is not limited thereto.

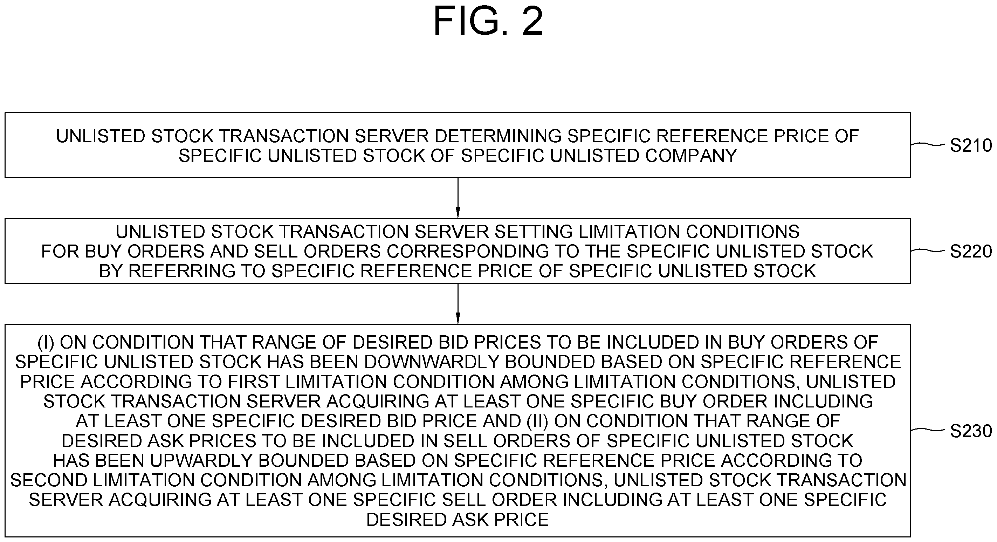

A method for supporting the transaction of the unlisted stocks by using the unlisted stock transaction server 100 in accordance with one example embodiment of the present disclosure is described by referring to Fig. 2 as follows.

Fig. 2 is a flowchart schematically illustrating the method for supporting the transaction of the unlisted stocks in accordance with one example embodiment of the present disclosure.

First, the unlisted stock transaction server 100 determines a specific reference price of a specific unlisted stock of a specific unlisted company, at a step of S210. Then, the unlisted stock transaction server 100 may set limitation conditions for both buy orders and sell orders corresponding to the specific unlisted stock by referring to the specific reference price of the specific unlisted stock, at a step of S220. Also, (i) on condition that a range of desired bid prices to be included in the buy orders of the specific unlisted stock has been downwardly bounded based on the specific reference price according to a first limitation condition among the limitation conditions, the unlisted stock transaction server 100 may acquire at least one specific buy order including at least one specific desired bid price, and (ii) on condition that a range of desired ask prices to be included in the sell orders of the specific unlisted stock has been upwardly bounded based on the specific reference price according to a second limitation condition among the limitation conditions, the unlisted stock transaction server 100 may acquire at least one specific sell order including at least one specific desired ask price, at a step of S230.

For reference, the condition of downwardly bounding the specific unlisted stock by the specific reference price is explained as follows. For example, the specific reference price may be set as the smallest possible value of the specific desired bid price, or a specific adjusted price acquired by adjusting the specific reference price may be set as the smallest possible value of the specific desired bid price. Similarly,, the condition of upwardly bounding the specific unlisted stock by the specific reference price is explained as follows. For example, the specific reference price may be set as the largest possible value of the specific desired ask price, or a specific adjusted price acquired by adjusting the specific reference price may be set as the largest possible value of the specific desired ask price.

Herein, how to determine the specific reference price for the specific unlisted stock is described below.

First, the specific reference price may be determined by referring to specific past investment information which includes one or more investments received by the specific unlisted company. The specific past investment information may be determined by referring to at least part of first specific past investment information to n-th specific past investment information and may be correlated with a first specific past weight to an n-th specific past weight corresponding to the first specific past investment information to the n-th specific past investment information.

Detailed explanation is provided as below by considering a company A as the specific unlisted company. Let's assume that the company A has received an investment worth 100 million USD in 2010, an investment worth 500 million USD in 2015, an investment worth 1 billion USD in 2020, and an investment of 1.2 billion USD in 2021. In this case, the first specific past investment information is 100 million USD in 2010, and the n-th specific past investment information is 1.2 billion USD in 2021. Further, the first specific past weight to the n-th specific past weight may be correlated with the first specific past investment information to the n-th specific past investment information, such that the first specific past weight to an (n-1)-th specific past weight corresponding to the first specific past investment information to (n-1)-th specific past investment information may be set as, e.g., 0, and the n-th specific past weight corresponding to the n-th specific past investment information may be set as, e.g., 1. In this case, only the investment of 1.2 billion USD is considered to determine the specific reference price. Herein, the above weights may be set differently depending on an administrator's use case and is not limited to the example above. For example, the first specific past weight to the (n-1)-th specific past weight may be set as 0.1, 0.15, ..., 0.25, and the n-th specific past weight corresponding to the n-th specific past investment information may be set as 0.3. It is appreciated that it is possible not to set a latest investment received to have the biggest weight value, that is, a specific past weight corresponding to a largest investment received may be a biggest weight value.

Secondly, the specific reference price may be determined by referring to specific expected investment information which includes one or more investments expected to be received by the specific unlisted company. The specific expected investment information may be determined by referring to at least part of the first specific past investment information to the n-th specific past investment information and first specific past investment time information to n-th specific past investment time information corresponding to the first specific past investment information to the n-th specific past investment information, and may be correlated with the first specific past weight to the n-th specific past weight corresponding to the first specific past investment information to the n-th specific past investment information.

Let's assume that the company A received the investment of 100 million USD in 2010, and the investment of 500 million USD in 2015, and the investment of 1 billion USD in 2018. Then, it is possible to calculate future investment information by referring to past investment information. For example, it may be possible to expect that the company A will receive the investment of 1.5 billion USD in 2021 by using the past investment information, past investment time information through a predetermined algorithm, and the specific reference price can be determined by referring to the calculated future investment information. Herein, different weights can be applied in the calculation. The different weights may be set similarly to the previous example, but they are not limited thereto.

Thirdly, the specific reference price may be determined by referring to other past investment information which includes one or more investments received by one or more other unlisted companies in a same industry as the specific unlisted company. Herein said other past investment information is determined by referring to at least part of first other past investment information to m-th other past investment information, which are in chronological order, and may be correlated with a first other past weight to an m-th other past weight corresponding to the first other past investment information to the m-th other past investment information.

In case there is no past investment information for the company A, said other past investment information may be used to determine the specific reference price for the company A. That is, if there is no past investment information of the company A, said other past investment information received by said other unlisted companies such as a company B, which may be a company in the same industry as the company A, may be referred to. A method for calculating said other past investment information is similar to calculating any of the specific past investment information for the company A, as explained above. Using a similar method, said other past investment information of the company B may be used to determine the specific reference price of the company A. Of course, the company B may be a single company, or there can be many other companies in the same industry.

Fourthly, the specific reference price may be determined by referring to other expected investment information which includes one or more investments expected to be received by one or more other unlisted companies in the same industry as the specific unlisted company. Said other expected investment information may be determined by referring to at least part of the first other past investment information to the m-th other past investment information and first other past investment time information to m-th other past investment time information corresponding to the first other past investment information to the m-th other past investment information, and may be correlated with the first other past weight to the m-th other past weight corresponding to the first other past investment information to the m-th other past investment information.

Yet again, said other expected investment information of said other unlisted companies, e.g., the company B, may be calculated by using a similar method of calculating the specific expected investment information of the company A, and said other expected investment information may be used for determining the specific reference price of the company A. Therefore, the detailed explanations thereon will be omitted.

Fifthly, the specific reference price may be determined by referring to market capitalization of one or more other listed companies in the same industry as the specific unlisted company. That is, since the specific unlisted company has not gone public yet, its specific reference price may be determined by referring to the market capitalization of said other listed companies. Herein, the market capitalization of one of said other listed companies may be referred to, or a group of said other listed companies may be referred to, but it is not limited thereto.

Finally, the specific reference price may be determined by referring to a specific company evaluation result of the specific unlisted company conducted by an accounting firm or gathered based on a guideline provided by a government body. That is, since market capitalization of the specific unlisted company has not been confirmed, the specific company evaluation result of the specific unlisted company conducted by the accounting firm or the government body may be referred to.

Meanwhile, below is an example embodiment of the transaction of the unlisted stocks which does not require a quantity match.

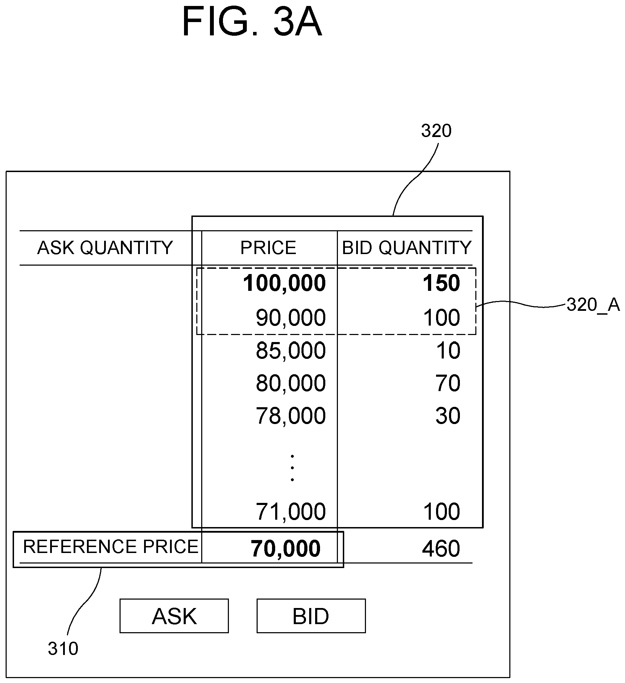

Figs. 3A to 3G are drawings schematically illustrating the transaction under a first mode which does not require the quantity match of the unlisted stocks in accordance with one example embodiment of the present disclosure. Herein, "does not require the quantity match" may mean a case where a quantity of the specific buy order and a quantity of the specific sell order are fixedly determined, but it is not limited thereto, and depending on circumstances even if the number of shares of the specific unlisted stock is not fixedly determined, the transaction may take place according to general transaction-related conditions, e.g., a price-first condition, a time-first condition, a quantity-first condition, etc.

That is, the specific unlisted stock is allowed to be transacted by matching at least part of a specific desired bid quantity included in the specific buy order with at least part of a specific desired ask quantity included in the specific sell order, but the first mode does not require the quantity match between the specific desired bid quantity and the specific desired ask quantity.

Specifically, the first mode may include a (1_1)-st mode in which the specific sell order may be acquired while only the specific buy order exists, a (1_2)-nd mode in which the specific buy order may be acquired while only the specific sell order exists, and a (1_3)-rd mode in which none of the specific buy order and the specific sell order may be acquired.

Firstly, the (1_1)-st mode is explained as below. According to the (1_1)-st mode, the specific sell order is acquired while only the specific buy order exists.

In the (1_1)-st mode, in response to the specific desired bid quantity being greater than the specific desired ask quantity, a transaction of the specific desired ask quantity may be allowed to be executed and information on the specific buy order may be updated to be a (1_1_A)-th quantity which may be acquired by subtracting the specific desired ask quantity from the specific desired bid quantity, and then the (1_1)-st mode may be maintained.

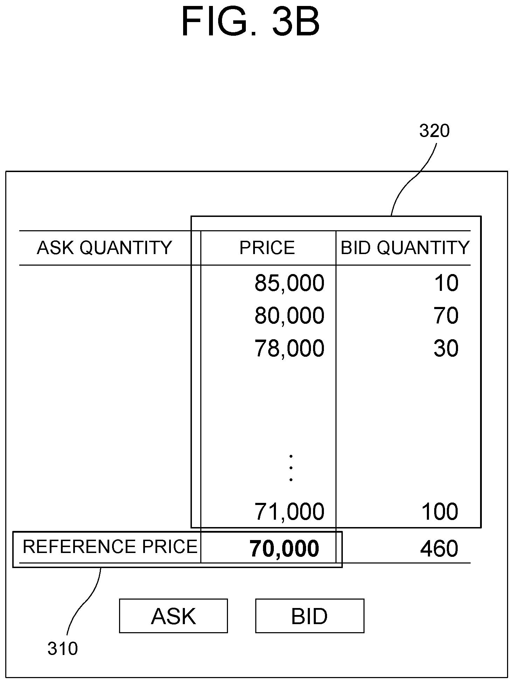

The details are as follows by referring to Figs. 3A and 3B.

As illustrated in Fig. 3A, on condition that each of a bid residual quantity is 150 shares, 100 shares, 10 shares, 70 shares, 30 shares, and 100 shares, in response to receiving the specific desired ask quantity of 250 shares, then a selling transaction of 150 shares and 100 shares with the highest prices 320_A may be allowed to be executed. Afterwards, each of the bid residual quantity may be updated to 10 shares, 70 shares, 30 shares, and 100 shares as shown in Fig. 3B. That is, the (1_1_A)-th quantity of 210 shares may be acquired by subtracting the specific desired ask quantity of 250 shares from the specific desired bid quantity of 460 shares. And, since the specific desired ask quantity is smaller than the specific desired bid quantity, the specific desired bid quantity still exists, and therefore, the (1_1)-st mode is maintained.

Meanwhile, in the (1_1)-st mode, in response to the specific desired ask quantity being greater than the specific desired bid quantity, a transaction of the specific desired bid quantity may be allowed to be executed and information on the specific sell order may be updated to be a (1_1_B)-th quantity which may be acquired by subtracting the specific desired bid quantity from the specific desired ask quantity, and then the (1_1)-st mode may be switched to the (1_2)-nd mode.

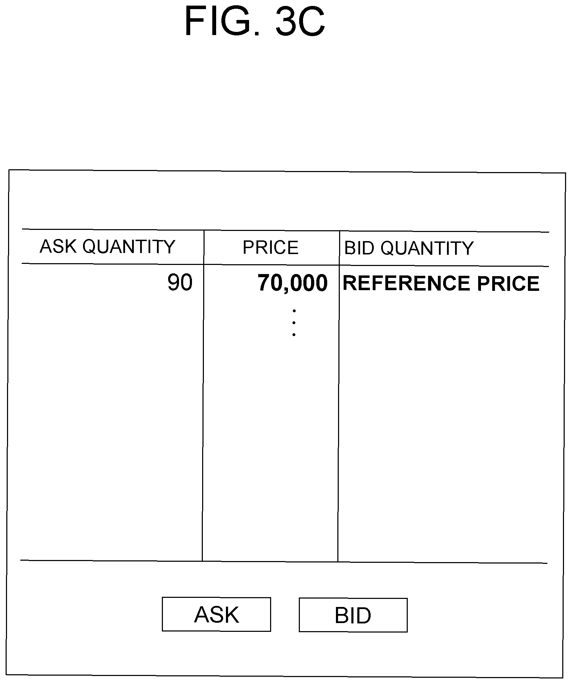

The details are as follows by referring to Figs. 3B and 3C.

As illustrated in Fig. 3B, on condition that the bid residual quantity is 210 shares, in response to receiving the specific desired ask quantity of 300 shares, then a selling transaction of the 210 shares may be allowed to be executed. Afterwards, as illustrated in Fig. 3C, an ask residual quantity is 90 shares which corresponds to the (1_1_B)-th quantity. Since the specific desired ask quantity is greater than the specific desired bid quantity, the specific desired ask quantity still exists, and therefore, the (1_1)-st mode may be switched to the (1_2)-nd mode. For reference, Fig. 3C shows an example of the specific desired ask price being 70,000 USD, but it is not limited thereto. As another example, if the specific desired ask price is inputted as 69,000 USD, the ask residual quantity may be displayed as 69,000.

Next, the (1_2)-nd mode is explained as below. According to the (1_2)-nd mode, the specific buy order is acquired while only the specific sell order exists.

In the (1_2)-nd mode, in response to the specific desired ask quantity being greater than the specific desired bid quantity, the transaction of the specific desired bid quantity may be allowed to be executed and information on the specific sell order may be updated to be a (1_2_A)-th quantity acquired by subtracting the specific desired bid quantity from the specific desired ask quantity, and then the (1_2)-nd mode may be maintained.

Meanwhile, in the (1_2)-nd mode, in response to the specific desired bid quantity being greater than the specific desired ask quantity, the transaction of the specific desired ask quantity may be allowed to be executed and information on the specific buy order may be updated to be a (1_2_B)-th quantity acquired by subtracting the specific desired ask quantity from the specific desired bid quantity, and then the (1_2)-nd mode may be switched to the (1_1)-st mode.

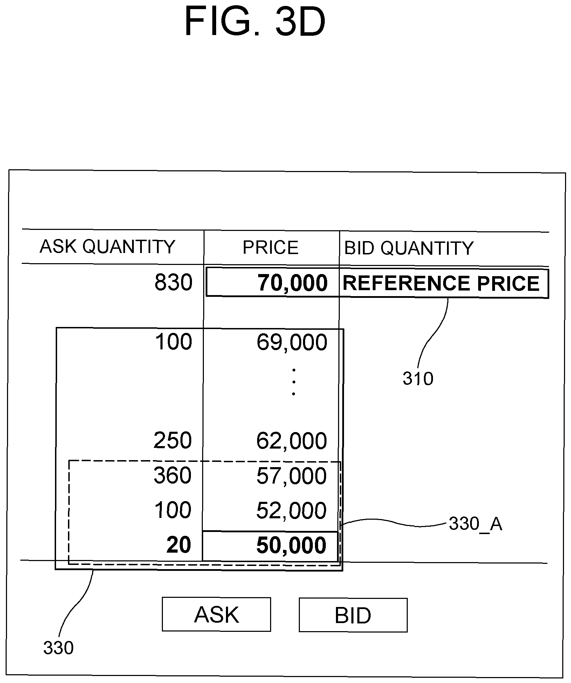

The details of the above are as follow by referring to Figs. 3D to 3E.

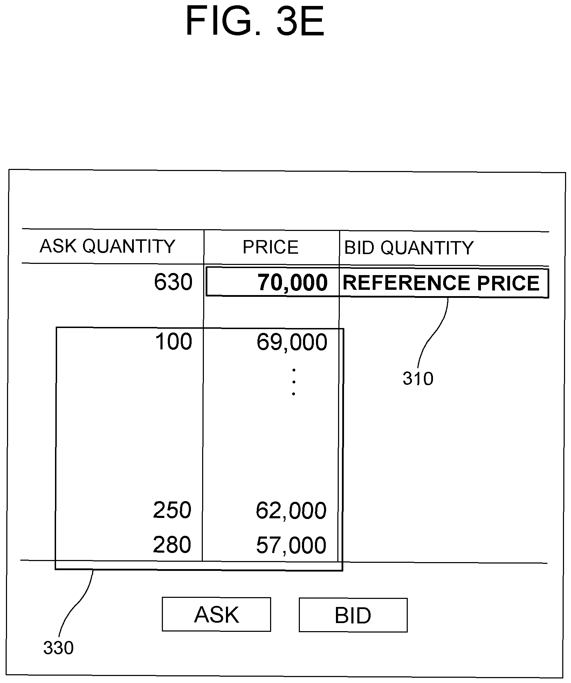

As illustrated in Fig. 3D, on condition that each of a ask residual quantity is 20 shares, 100 shares, 360 shares, 250 shares, and 100 shares, in response to receiving the specific desired bid quantity of 200 shares, then a buying transaction of 20 shares, 100 shares, and 80 shares with the lowest prices 330_A may be allowed to be executed. Afterwards, each of the ask residual quantity may be updated to 280 shares, 250 shares, and 100 shares as shown in Fig. 3E. For reference, since the specific desired bid quantity is 200 shares, the transaction may be executed starting from the lowest price, and thus only 80 shares may be transacted among the 360 shares, leaving 280 shares. That is, the (1_2_A)-th quantity of 630 shares may be acquired by subtracting the specific desired bid quantity of 200 shares from the specific desired ask quantity of 830 shares. That is, since the specific desired ask quantity is greater than the specific desired bid quantity, the specific desired ask quantity still exists, and therefore, the (1_2)-nd mode may be maintained.

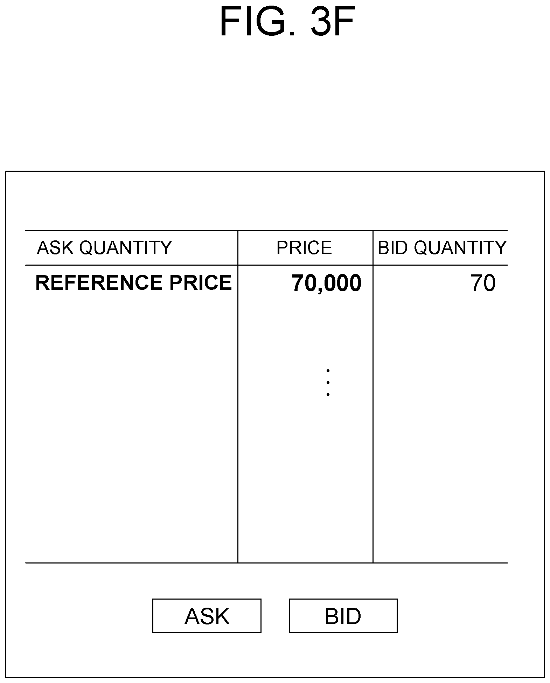

Further, as illustrated in Fig. 3E, on condition that the ask residual quantity is 630 shares, in response to receiving the specific desired bid quantity of 700 shares, then a buying transaction of the 630 shares may be allowed to be executed. Afterwards, as illustrated in Fig. 3F, the bid residual quantity is 70 shares which corresponds to the (1_2_B)-th quantity. That is, since the specific desired ask quantity is smaller than the specific desired bid quantity, the specific desired bid quantity still exists, and therefore, the (1_2)-nd mode may be switched to the (1_1)-st mode. For reference, Fig. 3E shows an example of the specific desired bid price being 70,000 USD, but it is not limited thereto. As another example, if the specific desired bid price is inputted as 71,000 USD, the bid residual quantity may be displayed as 71,000.

Next, the (1_3)-rd mode is explained as below. According to the (1_3)-rd mode, none of the specific buy order and the specific sell order is acquired.

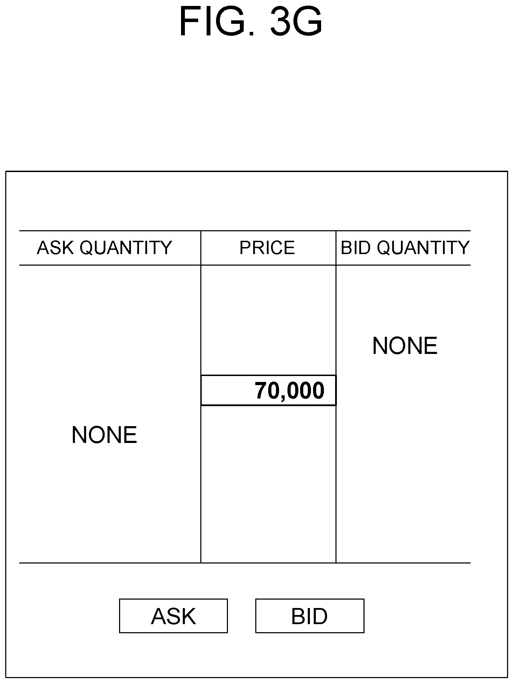

As illustrated in Fig. 3G, in the (1_3)-rd mode, none of the bid quantity and the ask quantity exists, and thus, in response to acquiring the specific buy order, the (1_3)-rd mode may be switched to the (1_1)-st mode, and in response to acquiring the specific sell order, the (1_3)-rd mode may be switched to the (1_2)-nd mode.

Meanwhile, below is one example embodiment of the transaction of the unlisted stocks which requires the quantity match. Herein, "requires the quantity match" may mean a case where one of desired ask quantities of sell orders and one of desired bid quantities of buy orders must be equal in order for a transaction to be executed (of course, under a condition that desired bid prices and desired ask prices satisfying the limitation conditions mentioned above). Herein, rules of transactions based on the price-first condition, i.e., a condition that transactions are executed in the order of prices, and the time-first condition, i.e. a condition that transactions are executed in the order of time sequences, may be applied.

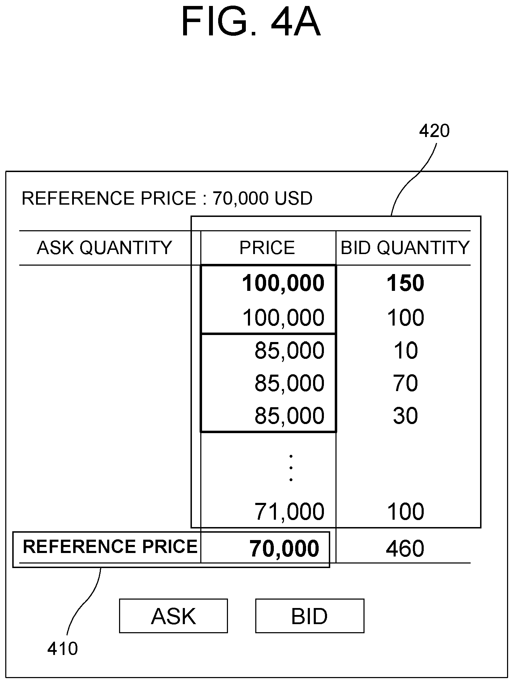

Figs. 4A to 4F are drawings schematically illustrating the transactions under the second mode which requires the quantity match of the unlisted stocks in accordance with one example embodiment of the present disclosure.

That is, the specific buy order may include at least part of a first specific buy order to an n-th specific buy order, and the specific sell order includes at least part of a first specific sell order to an m-th specific sell order.

Herein, the specific unlisted stock may be allowed to be transacted by matching at least part of a first specific desired bid quantity to an n-th specific desired bid quantity included in the first specific buy order to the n-th specific buy order with at least part of a first specific desired ask quantity to an m-th specific desired ask quantity included in the first specific sell order to the m-th specific sell order.

Specifically, the second mode may include a (2_1)-st mode in which the specific sell order is acquired while only the specific buy order exists, a (2_2)-nd mode in which the specific buy order is acquired while only the specific sell order exists, a (2_3)-rd mode in which both the specific sell order and the specific buy order are acquired, and a (2_4)-th mode in which none of the specific buy order and the specific sell order are acquired.

That is, the first mode does not require the quantity match, but the second mode does require the quantity match.

The details are as follows by referring to Figs. 4A to 4C.

Firstly, the (2_1)-st mode is explained as below. According to the (2_1)-st mode, the specific sell order is acquired while only the specific buy order(s) exists.

In the (2_1)-st mode, on condition that the first specific buy order to the n-th specific buy order exist, a k-th specific sell order may be acquired.

Herein, in case a quantity match of a k-th specific desired ask quantity exists among the first specific desired bid quantity to the n-th specific desired bid quantity, i.e., in case a quantity match exists between the k-th specific desired ask quantity and one of the first specific desired bid quantity to the n-th specific desired bid quantity, a transaction of the k-th specific desired ask quantity may be allowed to be executed, and then in case a (2_1)-st quantity acquired by subtracting the k-th specific desired ask quantity from a sum of the first specific desired bid quantity to the n-th specific desired bid quantity is greater than 0, the (2_1)-st mode may be maintained, and in case the (2_1)-st quantity is equal to 0, the (2_1)-st mode may be switched to the (2_4)-th mode.

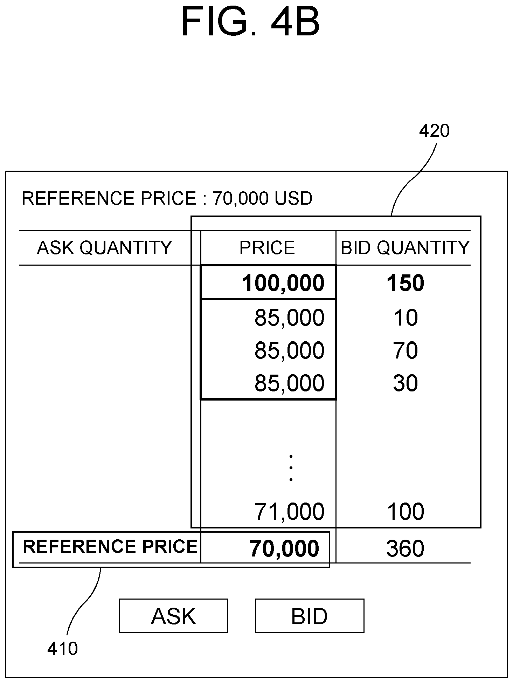

In detail, by referring to Fig. 4A, let's assume that each of desired bid quantities is 150 shares, 100 shares, 10 shares, 70 shares, 30 shares, and 100 shares and that the k-th specific desired ask quantity is 100 shares. That is, since 100 shares of a buy order which is a same quantity as the k-th specific desired ask quantity exists, a transaction of the 100 shares (note that a higher bid price has the priority) may be executed as illustrated in Fig. 4B, and thus the (2_1)-st quantity may be 360 shares acquired by subtracting the 100 shares from a sum of 460 shares. Herein, since 360 shares is greater than 0, the (2_1)-st mode may be maintained. However, if the (2_1)-st quantity is 0, the (2_1)-st mode may be switched to the (2_4)-th mode in which none of the specific buy order and the specific sell order exist.

Further, in response to a quantity match of the k-th specific desired ask quantity not existing among the first specific desired bid quantity to the n-th specific desired bid quantity, the (2_1)-st mode may be switched to the (2_3)-rd mode without allowing any transaction to be executed between the first specific buy order to the n-th specific buy order and the k-th specific sell order. Herein k is an integer greater than or equal to 1 and less than or equal to n.

Next, the (2_2)-nd mode is explained as below. According to the (2_2)-nd mode, the specific buy order is acquired while only the specific sell order(s) exists.

In the (2_2)-nd mode, on condition that the first specific sell order to the m-th specific sell order exist, a k-th specific buy order may be acquired.

Herein, in case a quantity match of a k-th specific desired bid quantity exists among the first specific desired ask quantity to the m-th specific desired ask quantity, a transaction of the k-th specific desired bid quantity may be allowed to be executed, and then in case a (2_2)-nd quantity which acquired by subtracting the k-th specific desired bid quantity from a sum of the first specific desired ask quantity to the m-th specific desired ask quantity is greater than 0, the (2_2)-nd mode may be maintained, and in case the (2_2)-nd quantity is equal to 0, the (2_2)-nd mode may be switched to the (2_4)-th mode.

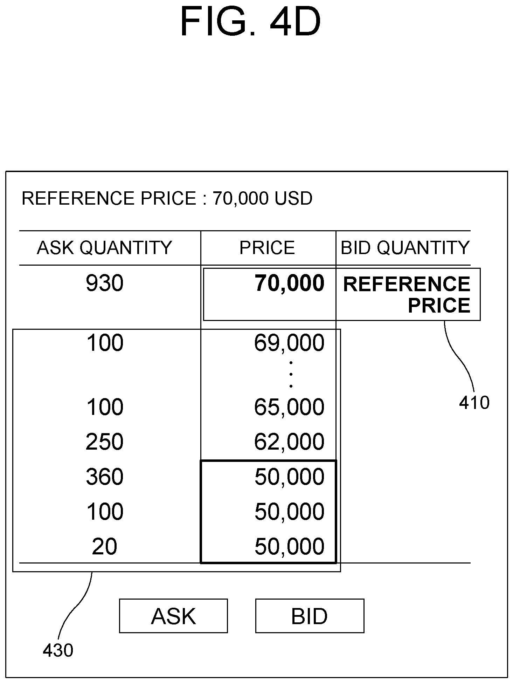

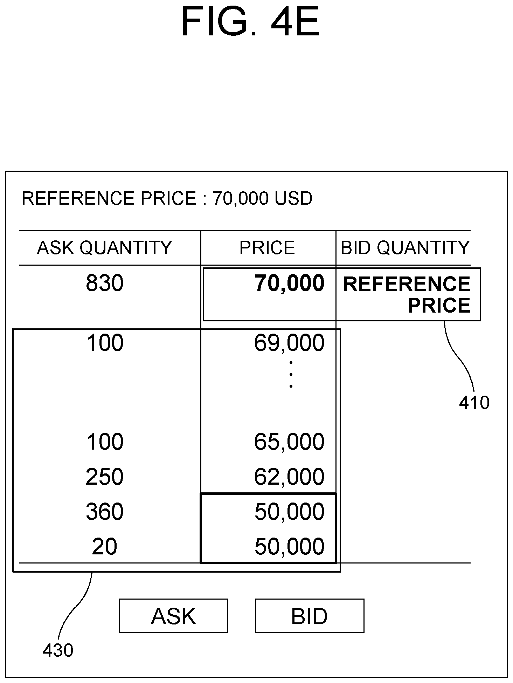

In details, by referring to Fig. 4D, let's assume that each of desired ask quantities is 100 shares, 100 shares, 250 shares, 360 shares, 100 shares, and 20 shares and that the k-th specific bid quantity is 100 shares. That is, since 100 shares of a sell order which is a same quantity as the k-th specific bid quantity exists, a transaction of the 100 shares (note that a lower ask price has the priority) may be executed as illustrated in Fig. 4E, and thus the (2_2)-nd quantity may be 830 shares acquired by subtracting the 100 shares from a sum of 930 shares. Herein, since 830 shares is greater than 0, the (2_2)-nd mode may be maintained. However, if the (2_2)-nd quantity is 0, the (2_2)-nd mode may be switched to the (2_4)-th mode in which none of the specific buy order and the specific sell order exist.

Further, in response to a quantity match of the k-th specific desired bid quantity not existing among the first specific desired ask quantity to the m-th specific desired ask quantity, the (2_2)-nd mode may be switched to the (2_3)-rd mode without allowing any transaction to be executed between the first specific sell order to the m-th specific sell order and the k-th specific buy order. Herein, k is an integer greater than or equal to 1 and less than or equal to m.

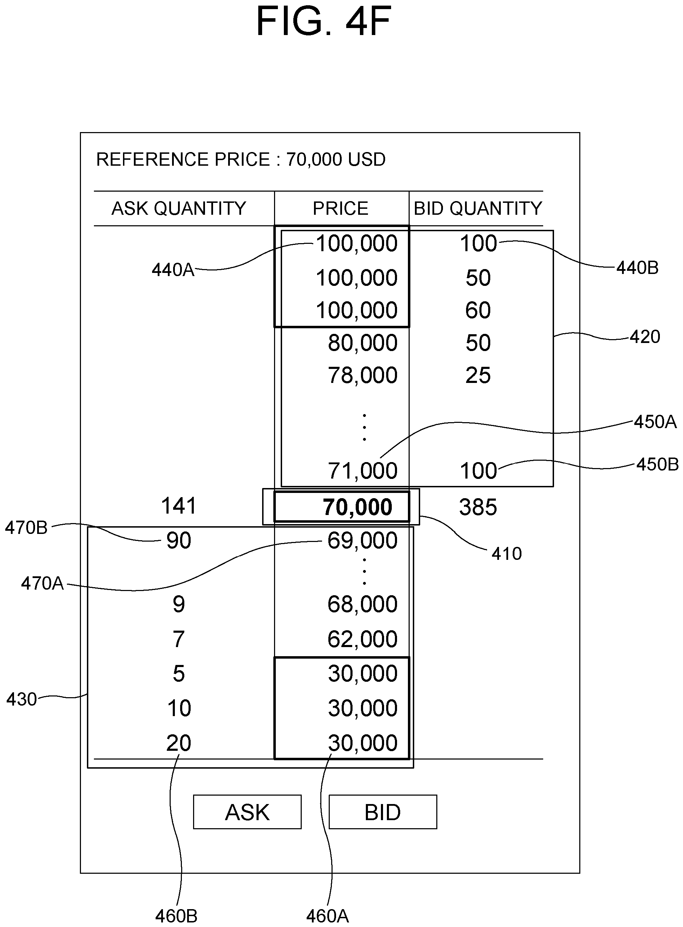

Next, the (2_3)-rd mode is explained as below. According to the (2_3)-rd mode, both the specific sell order and the specific buy order are acquired. Fig. 4F is referred to in order to explain the below details.

In the (2_3)-rd mode, in case a partial quantity match between one of the first specific desired ask quantity to the m-th specific desired ask quantity and one of the first specific desired bid quantity and the n-th specific desired bid quantity exists, the (2_3)-rd mode may be maintained, and in case a quantity match between all the first specific desired ask quantity to the m-th specific desired ask quantity and all the first specific desired bid quantity and the n-th specific desired bid quantity exists, the (2_3)-rd mode may be switched to the (2_4)-th mode. That is, since a quantity match between all the first specific desired ask quantity to the m-th specific desired ask quantity and all the first specific desired bid quantity and the n-th specific desired bid quantity exists, all of the transactions thereof may be executed. Therefore, the (2_3)-rd mode may be switched to the (2_4)-th mode in which none of the specific buy order and the specific sell order exists.

Referring back to Fig. 4F, since there is no match between any one of the desired bid quantities and any one of the desired ask quantities, the (2_3)-rd mode may be maintained. For example, if there is a newly-acquired desired bid quantity of 90 shares, then a transaction between the newly-acquired desired bid quantity of 90 shares and the desired ask quantity of 90 shares may be executed, and therefore, the (2_3)-rd mode may be maintained. However, if all of the desired bid quantities and the desired ask quantities are the same with each other, all the shares are allowed to be transacted and the (2_3)-rd mode may be switched to the (2_4)-th mode.

That is, the (2_4)-th mode is a mode in which none of the specific buy order and the specific sell order exists.

In the (2_4)-th mode, in response to acquiring the k-th specific buy order the (2_4)-th mode may be switched to the (2_1)-st mode while in response to acquiring the k-th specific sell order the (2_4)-th mode may be switched to the (2_2)-nd mode. Details thereof are similar to previous examples and therefore detailed explanations thereof will be omitted.

Meanwhile, processes of registering the specific buy order are explained below.

First, in response to acquiring the specific buy order from a buyer device, the unlisted stock transaction server 100 may request the buyer device to remit a deposit amount into an escrow account interworked with the unlisted stock transaction server 100. Herein, the deposit amount may be calculated by multiplying specific desired bid quantity included in the specific buy order with the specific reference price. Afterwards, in response to detecting that the deposit amount is remitted into the escrow account, the unlisted stock transaction server 100 may register the specific buy order.

Additionally, in response to acquiring the specific buy order from the buyer device, the unlisted stock transaction server 100 may suspend withdrawal of a buyer account for an ordered amount calculated by multiplying the specific desired bid quantity included in the specific buy order with the specific reference price. Afterwards, in response to acquiring the specific sell order from a seller device and determining that the specific sell order matches with the specific buy order, the unlisted stock transaction server 100 may release the suspended state of the ordered amount and then transfer the ordered amount to a seller account interworked with the seller device and accordingly change an ownership of the specific unlisted stock to the buyer, to thereby support the transaction of the specific unlisted stock.

It is appreciated that similar processes are performed to register the specific sell order.

That is, in response to acquiring the specific sell order from the seller device and determining that the specific buy order and the specific sell order match with each other, the unlisted stock transaction server 100 may transfer the deposit amount having been remitted into the escrow account to the seller account interworked with the seller device, and accordingly change the ownership of the specific unlisted stock to the seller, to thereby support the transaction of the specific unlisted stock.

Herein, in response to acquiring the specific sell order from the seller device, the unlisted stock transaction server 100 may request the seller device to confirm whether the specific desired ask quantity, included in the specific sell order, of the specific unlisted stock actually exists. That is, in response to confirming that the specific desired ask quantity of the specific unlisted stock exists, the unlisted stock transaction server may register the sell order.

This is to prevent a fake sell order, i.e., a sell order inputted by a user who does not have the ownership of the specific unlisted stock.

Herein, in response to acquiring the specific sell order from the seller device, the unlisted stock transaction server 100 may confirm that the specific desired ask quantity, included in the specific sell order, of the specific unlisted stock actually exists, and then may block any transaction of the specific desired ask quantity of the specific unlisted stock until a transaction is executed by a match between the specific sell order and the specific buy order or until a cancellation of the specific sell order.

This is to prevent a fake sell order, i.e., a sell order inputted by a user who has proved the ownership of the specific unlisted stock but has disposed the specific unlisted stock for a purpose of deception shortly after his or her proving the ownership of the specific unlisted stock.

Meanwhile, on condition that a minimum value of the range of the desired bid prices to be included in the buy orders of the specific unlisted stock is downwardly bounded based on a first specific adjusted reference price which is calculated by multiplying the specific reference price with a first adjustment factor, according to the first limitation condition, the unlisted stock transaction server 100 may acquire the specific buy order including the specific desired bid price.

Further, on condition that a maximum value of the range of the desired ask prices to be included in the sell orders of the specific unlisted stock is upwardly bounded based on a second specific adjusted reference price which is calculated by multiplying the specific reference price with a second adjustment factor, according to the second limitation condition, the unlisted stock transaction server 100 may acquire the specific sell order including the specific desired ask price.

Herein, on condition that at least one of the first adjustment factor and the second adjustment factor is set as 1.0, the unlisted stock transaction server 100 may set the first limitation condition and the second limitation condition, but it is not limited thereto. As an example, if the first adjustment factor is set as 0.9 and the second adjustment factor is set as 1.1, and oppositely, the first adjustment factor may be set as 1.1 and the second adjustment factor may be set as 0.9.

Detailed explanations thereof is as follow.

Referring to Fig. 4F, it can be seen that a region 440A represents the first specific desired bid price of 100,000 USD while a region 440B represents the first specific desired bid quantity of 100 shares, and a region 450A represents the n-th specific desired bid price of 71,000 USD while a region 450B represents the n-th specific desired bid quantity of 100 shares. Further, it can be seen that a region 460A represents the first specific desired ask price of 30,000 USD while a region 460B represents the first specific desired ask quantity of 20 shares, and a region 470A represents the m-th specific desired ask price of 69,000 USD while a region 470B represents the m-th specific desired ask quantity of 90 shares.

Herein, the range of the desired bid prices may include the first specific desired bid price to the n-th specific desired bid price, and the first specific adjusted reference price may be calculated by multiplying the specific reference price of 70,000 USD with the first adjustment factor.

On condition that the specific reference price is 70,000 USD, if the first adjustment factor is 0.9, then the first specific adjusted reference price may be 63,000 USD, if the first adjustment factor is 1.0, then the first specific adjusted reference price may be the same as the specific reference price of 70,000 USD, and if the first adjustment factor is 1.1, then the first specific adjusted reference price may be 77,000 USD.

That is, although the specific reference price is determined as 70,000 USD, depending on what the first adjustment factor is, the first specific adjusted reference price may be changed, thereby allowing the specific buy order to be based on the first specific adjusted reference price. For reference, the first adjustment factor may be set by an administrator, but it is not limited thereto.

Similarly as above, the range of the desired ask prices may include the first specific desired ask price to the m-th specific desired ask price, and the second specific adjusted reference price may be determined by multiplying the specific reference price with a second adjustment factor.

Since processes of applying the second adjustment factor are similar to the processes of applying the first adjustment factor as above, description thereof is omitted. As above, even if the specific reference price is 70,000 USD, the specific sell order may be acquired depending on the second specific adjusted reference price.

The method of supporting the transactions of the unlisted stocks was explained as above.

Below, a method of providing a UI capable of supporting the transactions of the unlisted stocks will be explained.

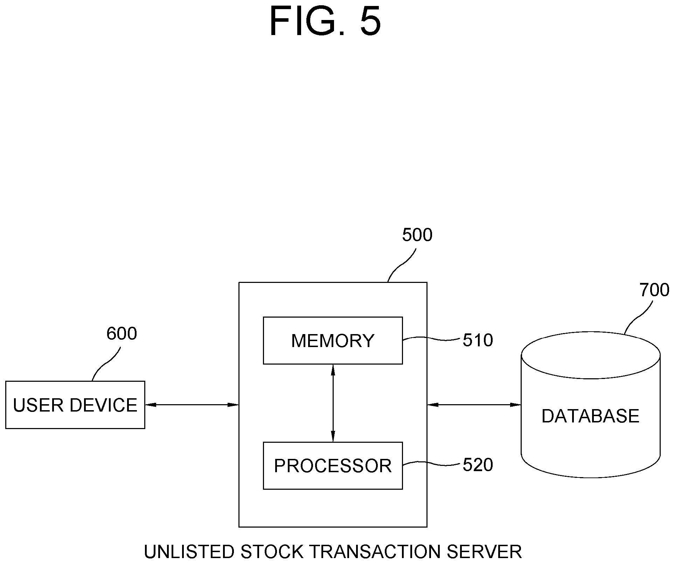

Fig. 5 is a drawing schematically illustrating an unlisted stock transaction server 500 for providing a UI capable of supporting the transactions of the unlisted stocks in accordance with one example embodiment of the present disclosure. It is appreciated that the unlisted stock transaction server 500 may be configured to be the same as or different from the unlisted stock transaction server 100, but it is not limited thereto.

As illustrated in Fig. 5, the unlisted stock transaction server 500 may include a memory 510 and a processor 520.

The memory 510 of the unlisted stock transaction server 500 may store instructions of the processor 520, more specifically, the instructions are codes generated such that the unlisted stock transaction server 500 may provide the UI capable of supporting the transactions of the unlisted stocks and can be implemented in a form of executable program command through a variety of computer means recordable to computer readable media. The instructions may execute processes for performing functions described in the specification.

Further, the processor 520 of the unlisted stock transaction server 500 may include hardware configuration of MPU (Micro Processing Unit) or CPU (Central Processing Unit), cache memory, data bus, etc. Additionally, any OS (operating system) and software configuration of applications that achieve specific purposes may be further included.

Furthermore, the unlisted stock transaction server 500 for providing the UI capable of supporting the transaction of the unlisted stocks may be interworked with a database 700. Herein, the database 700 may include at least one storage medium of flash memory type, hard disk type, multimedia card micro type (for example, SD or XD memory), RAM (Random Access Memory), SRAM (Static Random Access Memory), ROM (Read Only Memory), EEPROM (Electrically Erasable Programmable Read Only Memory), PROM (Programmable Read Only Memory), magnetic memory, magnetic disk, optical disk, but it is not limited thereto, and may include any medium capable of storing data. Further, as the case may be, the database 700 may be installed separately from the unlisted stock transaction server 500 for providing the UI capable of supporting the transaction of the unlisted stocks, or may be installed within the unlisted stock transaction server 500 to transmit and record data, and may also be implemented separately into two or more DBs, contrary to the illustration.

Furthermore, the unlisted stock transaction server 500 for providing the UI capable of supporting the transaction of the unlisted stocks may be interworked with a user device 600. Herein, the user device 600 may be a phone of a user, but it is not limited thereto. Herein, there may be one or more user devices 600. The present disclosure will only consider one user device 600, however, the scope of the present invention is not limited thereto.

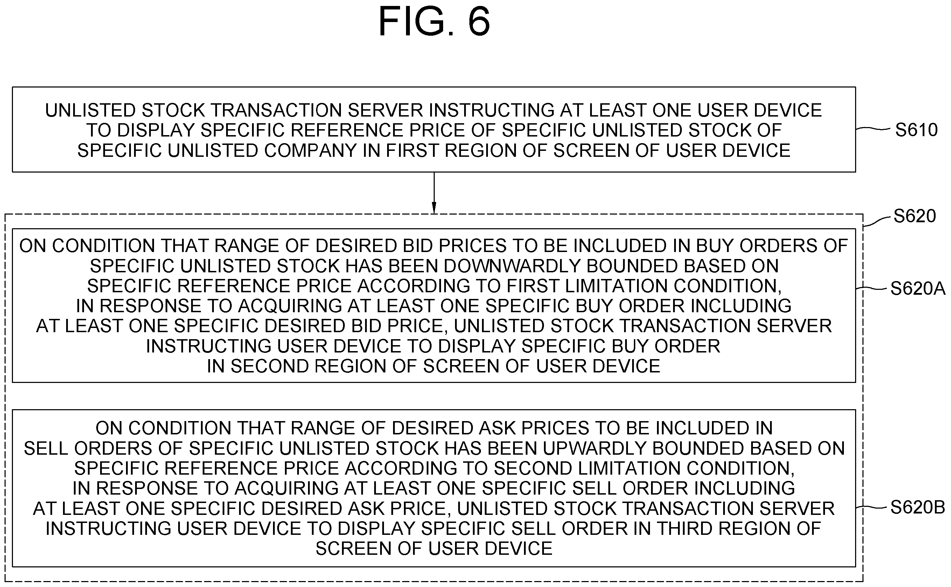

The method of providing the UI for supporting the transaction of the unlisted stocks by using the unlisted stock transaction server 500 in accordance with one example embodiment of the present disclosure is described by referring to Fig. 6 as follows.

Fig. 6 is a flowchart schematically illustrating steps of providing the UI capable of supporting the transaction of the unlisted stocks in accordance with one example embodiment of the present disclosure.

First, the unlisted stock transaction server 500 may instruct at least one user device 600 to display the specific reference price of the specific unlisted stock of the specific unlisted company in a first region of a screen of the user device 600, at a step of S610.

Afterwards, on condition that the range of desired bid prices to be included in the buy orders of the specific unlisted stock has been downwardly bounded based on the specific reference price according to the first limitation condition, in response to acquiring said at least one specific buy order including said at least one specific desired bid price, the unlisted stock transaction server 500 may instruct the user device 600 to display the specific buy order in a second region of the screen of the user device, at a step of S620A.

Additionally, on condition that the range of desired ask prices to be included in the sell orders of the specific unlisted stock has been upwardly bounded based on the specific reference price according to the second limitation condition, in response to acquiring said at least one specific sell order including said at least one specific desired ask price, the unlisted stock transaction server 500 may instruct the user device 600 to display the specific sell order in a third region of the screen of the user device, at a step of S620B.

That is, the transaction of the specific unlisted stock may be performed by executing at least part of the specific buy order and the specific sell order.

For reference, the condition of downwardly bounding the specific unlisted stock by the specific reference price is explained as follows. For example, the specific reference price may be set as the smallest possible value of the specific desired bid price, or the specific adjusted price acquired by adjusting the specific reference price may be set as the smallest possible value of the specific desired bid price. Similarly, the condition of upwardly bounding the specific unlisted stock by the specific reference price is explained as follows. For example, the specific reference price may be set as the largest possible value of the specific desired bid price, or the specific adjusted price acquired by adjusting the specific reference price may be set as the largest possible value of the specific desired bid price.

Meanwhile, below are examples of the UI, i.e., an example of the transaction of the unlisted stocks which does not require the quantity match and another example of the transaction of the unlisted stocks which requires the quantity match.

First, an example of the UI which does not require the quantity match will be explained below.

For reference, as explained previously, "does not require the quantity match" may mean that it is not necessary to equate a quantity of the specific buy order with a quantity of the specific sell order. For example, if it is assumed that there are 3 buy orders of 4 shares, 6 shares, and 10 shares, and 1 sell order of 5 shares, even though there is no quantity match between the sell order and any one of the buy orders, the transaction can be performed.

That is, the specific unlisted stock may be allowed to be transacted by matching at least part of the specific desired bid quantity included in the specific buy order with at least part of the specific desired ask quantity included in the specific sell order according to the first mode which does not require the quantity match between the specific desired bid quantity and the specific desired ask quantity.

First, the first mode may include the (1_1)-st mode in which the specific sell order is acquired while only the specific buy order exists, the (1_2)-nd mode in which the specific buy order is acquired while only the specific sell order exists, and the (1_3)-rd mode in which none of the specific buy order and the specific sell order is acquired.

The details are as follows by referring back to Figs. 3A to 3G.

As illustrated in Figs. 3A and 3B, in the (1_1)-st mode, each of the first specific desired bid price to the n-th specific desired bid price in a price descending order and each of the first specific desired bid quantity to the n-th specific desired bid quantity corresponding to the first specific desired bid price to the n-th specific desired bid price may be allowed to be displayed in the second region 320 of the screen of the user device 600.

Herein, in case the k-th specific desired ask quantity is included in the specific sell order, in response to the sum of the first specific desired bid quantity to the n-th specific desired bid quantity being greater than the k-th specific desired ask quantity, the transaction of the k-th specific desired ask quantity may be allowed to be executed by sequentially matching the k-th specific desired ask quantity with the first specific desired bid quantity to the n-th specific desired bid quantity in the order of the first specific desired bid quantity to the n-th specific desired bid quantity and accordingly an updated desired bid quantity acquired by subtracting a matched quantity of the k-th specific desired ask quantity from each of the first specific desired bid quantity to the n-th specific desired bid quantity may be allowed to be displayed in the second region 320 while the (1_1)-st mode may be maintained.

Meanwhile, in response to the sum of the first specific desired bid quantity to the n-th specific desired bid quantity being smaller than the k-th specific desired ask quantity, a transaction corresponding to the sum of the first specific desired bid quantity to the n-th specific desired bid quantity may be allowed to be executed and accordingly a first differential quantity acquired by subtracting the sum of the first specific desired bid quantity to the n-th specific desired bid quantity from the k-th specific desired ask quantity may be allowed to be displayed in the third region without displaying the first specific desired bid quantity to the n-th specific in the second region 320, and then the (1_1)-st mode may be switched to the (1_2)-nd mode.

As explained previously, if the sum of the first specific desired bid quantity to the n-th specific desired bid quantity is greater than the k-th specific desired ask quantity, then the (1_1)-st mode may be maintained, and if the sum of the first specific desired bid quantity to the n-th specific desired bid quantity being smaller than the k-th specific desired ask quantity, then the (1_1)-st mode may be switched to the (1_2)-nd mode.

The third region will be explained in detail below.

Meanwhile, as illustrated in Figs. 3D and 3E, in the (1_2)-nd mode, each of the first specific desired ask price to the m-th specific desired ask price in a price ascending order and each of the first specific desired ask quantity to the m-th specific desired ask quantity corresponding to the first specific desired ask price to the m-th specific desired ask price may be allowed to be displayed in the third region 330 of the screen of the user device 600.

Herein, in response to the sum of the first specific desired ask quantity to the m-th specific desired ask quantity being greater than the k-th specific desired bid quantity, the transaction of the k-th specific desired bid quantity may be allowed to be executed by sequentially matching the k-th specific desired bid quantity with the first specific desired ask quantity to the m-th specific desired ask quantity in the order of the first specific desired ask quantity to the m-th specific desired ask quantity and accordingly an updated desired ask quantity acquired by subtracting a matched quantity of the k-th specific desired bid quantity from each of the first specific desired ask quantity to the m-th specific desired ask quantity may be allowed to be displayed in the third region 330 while the (1_2)-nd mode may be maintained.

Meanwhile, in response to the sum of the first specific desired ask quantity to the m-th specific desired ask quantity being smaller than the k-th specific desired bid quantity, a transaction corresponding to the sum of the first specific desired ask quantity to the m-th specific desired ask quantity may be allowed to be executed and accordingly a second differential quantity acquired by subtracting the sum of the first specific desired ask quantity to the m-th specific desired ask quantity from the k-th specific desired bid quantity may be allowed to be displayed in the second region without displaying the first specific desired ask quantity to the m-th specific desired ask quantity in the third region 330, and then the (1_2)-nd mode may be switched to the (1_1)-st mode.

As explained previously, if the sum of the first specific desired ask quantity to the m-th specific desired ask quantity is greater than the k-th specific desired bid quantity, then the (1_2)-nd mode may be maintained, and if the sum of the first specific desired ask quantity to the m-th specific desired ask quantity is smaller than the k-th specific desired bid quantity, then the (1_2)-nd mode may be switched to the (1_1)-st mode.

Next, as illustrated in Fig. 3G, in the (1_3)-rd mode, none of the specific buy order and the specific sell order is acquired. Accordingly, in the (1_3)-rd mode, in response to acquiring the specific buy order, the (1_3)-rd mode may be switched to the (1_1)-st mode, and in response to acquiring the specific sell order, the (1_3)-rd mode may be switched to the (1_2)-nd mode.

Meanwhile, below is one example embodiment of the UI capable of supporting the transaction of the unlisted stocks which requires the quantity match.

That is, the specific unlisted stock is allowed to be transacted by matching at least part of the specific desired bid quantity included in the specific buy order with at least a part of the specific desired ask quantity included in the specific sell order according to the second mode which does require the quantity match between the specific desired bid quantity and the specific desired ask quantity.

First, the second mode may include the (2_1)-st mode in which the specific sell order is acquired while only the specific buy order exists, the (2_2)-nd mode in which the specific buy order is acquired while only the specific sell order exists, the (2_3)-rd mode in which both the specific sell order and the specific buy order are acquired, and the (2_4)-th mode in which none of the specific buy order and the specific sell order are acquired.

The details are as follows by referring back to Figs. 4A to 4F.

As illustrated in Figs. 4A and 4B, in the (2_1)-st mode, each of the first specific desired bid price to the n-th specific desired bid price in the price descending order and each of the first specific desired bid quantity to the n-th specific desired bid quantity corresponding to the first specific desired bid price to the n-th specific desired bid price may be allowed to be displayed in the second region 420 of the screen of the user device 600.

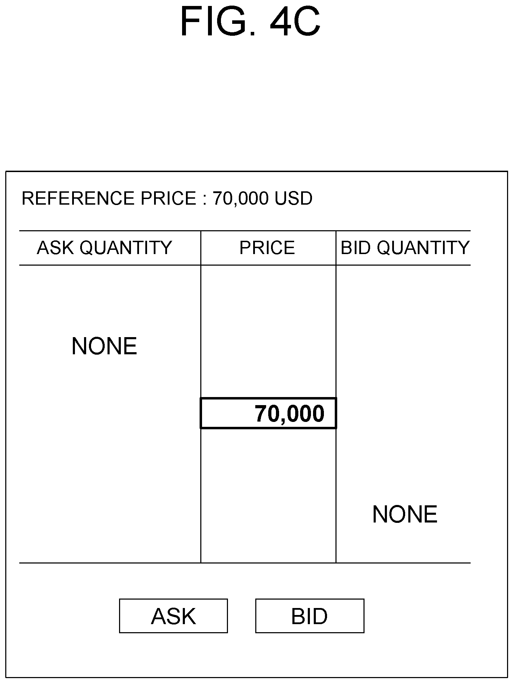

Herein, in response to detecting that there is a quantity match between the k-th specific desired ask quantity and one of the first specific desired bid quantity to the n-th specific desired bid quantity, the transaction of the k-th specific desired ask quantity may be allowed to be executed, and then in case a (2_1)-st differential quantity acquired by subtracting the k-th specific desired ask quantity from the first specific desired bid quantity to the n-th specific desired bid quantity is greater than 0, an updated desired bid quantity acquired by subtracting the matched quantity of the k-th specific desired ask quantity from the first specific desired bid quantity to the n-th specific desired bid quantity may be allowed to be displayed in the second region 420 while the (2_1)-st mode may be maintained, and in case the (2_1)-st differential quantity is equal to 0, nothing may be allowed to be displayed in the second region 420 and the (2_1)-st mode may be switched to the (2_4)-th mode as shown in Fig. 4C.

Meanwhile, as illustrated in Fig. 4F, in response to detecting that there is no quantity match between the k-th specific desired ask quantity and any one of the first specific desired bid quantity to the n-th specific desired bid quantity, the first specific buy order to the n-th specific buy order may be allowed to be displayed in the second region 420, and the k-th specific sell order may be allowed to be displayed in the third region 430, i.e., the (2_1)-st mode may be switched to the (2_3)-rd mode without allowing any transaction between the k-th specific sell order and any one of the first specific buy order to the n-th specific buy order to be executed. The above processes are described in connection with Fig. 4F as below.

That is, since a quantity match is required to execute any transaction, if the quantity match does not exist, then no transaction is executed.

Meanwhile, as illustrated in Figs. 4D and 4E, in the (2_2)-nd mode, each of the first specific desired ask price to the m-th specific desired ask price in the price ascending order and each of the first specific desired ask quantity to the m-th specific desired ask quantity corresponding to the first specific desired ask price to the m-th specific desired ask price may be allowed to be displayed in the third region 430 of the screen of the user device 600.

Herein, in case the k-th specific desired bid quantity included in the specific buy order is acquired, in response to detecting that there is a quantity match between the k-th specific desired bid quantity and one of the first specific desired ask quantity to the m-th specific desired ask quantity, the transaction of the k-th specific desired bid quantity may be allowed to be executed, and then in case a (2_2)-nd differential quantity acquired by subtracting the k-th specific desired bid quantity from the first specific desired ask quantity to the n-th specific desired ask quantity is greater than 0, an updated desired ask quantity acquired by subtracting the matched quantity of the k-th specific desired ask quantity from the first specific desired ask quantity to the m-th specific desired ask quantity may be allowed to be displayed in the third region 430 while the (2_2)-nd mode may be maintained, and in case the (2_2)-nd differential quantity is equal to 0, nothing is allowed to be displayed in the third region 430 and the (2_2)-nd mode may be switched to the (2_4)-th mode.

Meanwhile, in response to detecting that there is no quantity match between the k-th specific desired bid quantity and any one of the first specific desired ask quantity to the m-th specific desired ask quantity, the first specific sell order to the m-th specific sell order may be allowed to be displayed in the third region 430, and the k-th specific buy order may be allowed to be displayed in the second region 420, i.e., the (2_2)-nd mode may be switched to the (2_3)-rd mode without allowing any transaction between the k-th specific buy order and the first specific sell order to the m-th specific sell order to be executed.

That is, the quantity match is required to execute any transaction.

Next, by referring back to Fig. 4F, in the (2_3)-rd mode, both of the specific buy order and the specific sell order are acquired. Herein, in the (2_3)-rd mode, in response to detecting that there is the partial quantity match between a part of the first specific desired ask quantity to the m-th specific desired ask quantity and one of the first specific desired bid quantity and the n-th specific desired bid quantity, the (2_3)-rd mode may be maintained, and in response to detecting that there is the quantity match between all the first specific desired ask quantity to the m-th specific desired ask quantity and all the first specific desired bid quantity and the n-th specific desired bid quantity, the (2_3)-rd mode may be switched to the (2_4)-th mode.

That is, if the specific desired ask quantity and the specific desired bid quantity are not the same, then no transaction may be executed, and since both the specific desired ask quantity and the specific desired bid quantity exist, the (2_3)-rd mode may be maintained.

Meanwhile, in the (2_4)-th mode, in response to acquiring the k-th specific buy order, the (2_4)-th mode may be switched to the (2_1)-st mode and in response to acquiring the k-th specific sell order, the (2_4)-th mode may be switched to the (2_2)-nd mode. Since the above processes are similar to the ones previously explained, detailed explanations thereof will be omitted.

Meanwhile, a more detailed explanation on the UI capable of supporting an execution of the specific buy order of the unlisted stocks will be made as follows.

By referring back to Fig. 3A, the unlisted stock transaction server 500 may display each of the first specific desired bid price (i.e. 100,000 USD) to the n-th specific desired bid price (i.e. 71,000 USD) within the range of the desired bid prices in the price descending order and each of the first specific desired bid quantity (i.e. 150 shares) to the n-th specific desired bid quantity (i.e. 100 shares) corresponding to the first specific desired bid price to the n-th specific desired bid price may be allowed to be displayed in the second region 320 of the screen of the user device 600. For reference, the specific desired bid price of 70,000 USD is not illustrated in the Fig. 3A.

Herein, each of the first specific desired bid price to the n-th specific desired bid price and each of a first specific desired bid quantity to an n-th specific desired bid quantity may be displayed by assigning each of increasing coordinate values on a vertical axis to each of the n-th specific desired bid price to the first specific desired bid price in the order of the n-th specific desired bid price to the first specific desired bid price, to thereby display the n-th specific desired bid price to the first specific desired bid price in the second region 320, and by assigning each of the increasing coordinates values on the vertical axis to the n-th specific desired bid quantity to the first specific desired bid quantity corresponding to the n-th specific desired bid price to the first specific desired bid price, to thereby display the n-th specific desired bid quantity to the first specific desired bid quantity on a first side of the vertical axis in the second region 320. Herein a direction of the vertical axis is going from a bottom of the screen to a top of the screen of the user device 600.

Additionally, the unlisted stock transaction server 500 may (i) assign each of the increasing coordinate values on the vertical axis to each of the n-th specific desired bid price to the first specific desired bid price in the order of the n-th specific desired bid price to the first specific desired bid price to thereby support the user device 600 to display the n-th specific desired bid price to the first specific desired bid price in the second region 320, and (ii) assign a specific coordinate value on the vertical axis, which is smaller than an n-th coordinate value on the vertical axis corresponding to the n-th specific desired bid price, to the specific reference price to thereby support the user device 600 to additionally display the specific reference price at the specific coordinate value in the first region 310.

Meanwhile, even more detailed explanation on the UI capable of supporting an execution of a specific sell order of the unlisted stocks will be made as follows.

By referring back to Fig. 3D, the unlisted stock transaction server 500 may display each of the first specific desired ask price (i.e. 50,000 USD) to the m-th specific desired ask price (i.e. 69,000 USD) within the range of the desired bid prices in the price ascending order and each of the first specific desired ask quantity (i.e. 20 shares) to the m-th specific desired ask quantity (i.e. 100 shares) corresponding to the first specific desired bid price to the n-th specific desired bid price may be allowed to be displayed in the third region 330 of the screen of the user device 600. For reference, a specific desired ask price of 70,000 USD is not illustrated in the Fig. 3D.

Herein, each of the first specific desired ask price to the m-th specific desired ask price and each of the first specific desired ask quantity to the m-th specific desired ask quantity corresponding to the first specific desired ask price to the m-th specific desired ask price may be displayed by assigning each of the increasing coordinate values on the vertical axis to each of the first specific desired ask price to the m-th specific desired ask price in the order of the first specific desired ask price to the m-th specific desired ask price, to thereby display the first specific desired ask price to the m-th specific desired ask price in the third region 330 and by assigning each of the increasing coordinates values on the vertical axis to the first specific desired ask quantity to the m-th specific desired ask quantity corresponding to the first specific desired ask price to the m-th specific desired ask price, to thereby display the first specific desired ask quantity to the m-th specific desired ask quantity on a second side of the vertical axis in the third region 330.

Additionally, the unlisted stock transaction server 500 may (i) assign each of the increasing coordinate values on the vertical axis to each of the first specific desired ask price to the m-th specific desired ask price in the order of the first specific desired ask price to the m-th specific desired ask price and thus support the user device 600 to display the first specific desired ask price to the m-th specific desired ask price in the third region 330, and (ii) assign the specific coordinate value on the vertical axis, which is larger than an m-th coordinate value on the vertical axis corresponding to the m-th specific desired ask price, to the specific reference price and thus support the user device 600 to additionally display the specific reference price at the specific coordinate value in the first region 310.

Meanwhile, a more detailed explanation on the UI capable of displaying the specific buy order and the specific sell order of the unlisted stocks will be made as follows.

Referring back to Fig. 4F, the unlisted stock transaction server 500 may simultaneously support the user device 600 to display each of the first specific desired bid price 440A to the n-th specific desired bid price 450A within the range of the desired bid prices in the price descending order and each of the first specific desired bid quantity 440B to the n-th specific desired bid quantity 450B corresponding to the first specific desired bid price 440A to the n-th specific desired bid price 450A in the second region 420 of the screen of the user device 600, and at the same time may display each of the first specific desired ask price 460A to the m-th specific desired ask price 470A within the range of the desired ask prices the price ascending order and each of the first specific desired ask quantity 460B to the m-th specific desired ask quantity 470B corresponding to the first specific desired ask price 460A to the m-th specific desired ask price 470A in the third region 430 of the screen of the user device 600. For reference, the specific desired bid price of 70,000 USD and the specific desired ask price of 70,000 USD are not illustrated in the Fig. 4F.

Herein, each of the n-th specific desired bid price 450A to the first specific desired bid price 440A and each of the n-th specific desired bid quantity 450B to the first specific desired bid quantity 440B may be displayed by assigning each of increasing coordinate values on the vertical axis to each of the n-th specific desired bid price 450A to the first specific desired bid price 440A in the order of the n-th specific desired bid price 450A to the first specific desired bid price 440A and thus displaying the n-th specific desired bid price 450A to the first specific desired bid price 440A in the second region 420, and assigning each of the increasing coordinates values on the vertical axis to the n-th specific desired bid quantity 450B to the first specific desired bid quantity 440B corresponding to the n-th specific desired bid price 450A to the first specific desired bid price 440A and thus displaying the n-th specific desired bid quantity 450B to the first specific desired bid quantity 440B on the first side of the vertical axis in the second region 420.

Additionally, each of the first specific desired ask price 460A to the m-th specific desired ask price 470A and each of the first specific desired ask quantity 460B to the m-th specific desired ask quantity 470B may be displayed by assigning each of increasing coordinate values on the vertical axis to the first specific desired ask price 460A to the m-th specific desired ask price 470A in the order of the first specific desired ask price 460A to the m-th specific desired ask price 470A to thereby display the first specific desired ask price 460A to the m-th specific desired ask price 470A in the third region 430, and by assigning each of the increasing coordinates values on the vertical axis to the first specific desired ask quantity 460B to the m-th specific desired ask quantity 470B corresponding to the first specific desired ask price 460A to the m-th specific desired ask price 470B, to thereby display the first specific desired ask quantity 460B to the m-th specific desired ask quantity 470B on the second side of the vertical axis in the third region 430.

For reference, the unlisted stock transaction server 500 may assign coordinates values on the vertical axis in the second region 420 to be larger than coordinates values on the vertical axis in the third region 430, to thereby (i) allow the first specific desired ask price 460A to the m-th specific desired ask price 470A to be displayed in the third region 430 in the order of the first specific desired ask price 460A to the m-th specific desired ask price 470A in the increasing direction from a smaller coordinate value to a larger coordinate value on the vertical axis in the third region 430, and (ii) allow the n-th specific desired bid price 450A to the first specific desired bid price 440A to be displayed in the second region 420 in the order of the n-th specific desired bid price 450A to the first specific desired bid price 440A in an increasing direction from a smaller coordinate value to a larger coordinate value on the vertical axis in the second region 420, wherein the coordinates values of the vertical axis in the second region are greater than an m-th coordinate value of the vertical axis corresponding to the m-th specific desired ask price. Therefore, the UI will be able to display the bid price at the top and the ask price will be displayed at the bottom, contrary to general listed stock transaction Uls.

Additionally, the unlisted stock transaction server 500 may (i) allow the first specific desired ask price 460A to the m-th specific desired ask price 470A to be displayed in the order of the first specific desired ask price 460A to the m-th specific desired ask price 470A in the increasing direction from a smaller coordinate value to a larger coordinate value on the vertical axis, (ii) allow the n-th specific desired bid price 450A to the first specific desired bid price 440A to be displayed in the order of the n-th specific desired bid price 450A to the first specific desired bid price 440A in an increasing direction from a smaller coordinate value to a larger coordinate value on the vertical axis in the second region 420, wherein coordinates values of the vertical axis in the second region 420 may be greater than the m-th coordinate value of the vertical axis corresponding to the m-th specific desired ask price 470A, and (iii) allow a specific coordinate value of the specific reference price 410 on the vertical axis to be greater than the m-th coordinate value (i.e. the coordinate values on the vertical axis of the region corresponding to 470A and 470B) and smaller than an n-th coordinate value (i.e. the coordinate values on the vertical axis of the region corresponding to 450A and 450B) of the vertical axis corresponding to the n-th specific desired bid price 450A. Herein, the n-th coordinate value corresponds to a coordinate value on the vertical axis corresponding to the n-th specific desired bid price 450A.

Meanwhile, on condition that the minimum value of the range of the desired bid prices to be included in the buy orders of the specific unlisted stock is downwardly bounded based on the first specific adjusted reference price calculated by multiplying the specific reference price with the first adjustment factor, according to the first limitation condition, the unlisted stock transaction server 500 may acquire the specific buy order including the specific desired bid price and may display the specific buy order including the specific desired bid price in the second region 420.

Additionally, on condition that the maximum value of the range of the desired ask prices to be included in the sell orders of the specific unlisted stock is upwardly bounded based on the second specific adjusted reference price calculated by multiplying the specific reference price with the second adjustment factor, according to the second limitation condition, the unlisted stock transaction server 500 may acquire the specific sell order including the specific desired ask price and may display the specific sell order including the specific desired ask price in the third region 430.

Herein, the specific reference price may be determined by referring to at least part of (i) the specific past investment information which includes one or more investments received by the specific unlisted company, (ii) the specific expected investment information which includes one or more investments expected to be received by the specific unlisted company, (iii) the other past investment information which includes one or more investments received by one or more other unlisted companies in a same industry as the specific unlisted company, (iv) the other expected investment information which includes one or more investments expected to be received by the one or more other unlisted companies in the same industry as the specific unlisted company, and (v) the market capitalization of one or more other listed companies in the same industry as the specific unlisted company.

Herein, the specific past investment information may be determined by referring to at least part of the first specific past investment information to the n-th specific past investment information, and is correlated with the first specific past weight to the n-th specific past weight corresponding to the first specific past investment information to the n-th specific past investment information. Further, the specific expected investment information may be determined by referring to at least part of the first specific past investment information to the n-th specific past investment information and the first specific past investment time information to the n-th specific past investment time information corresponding to the first specific past investment information to the n-th specific past investment information, and is correlated with the first specific past weight to the n-th specific past weight corresponding to the first specific past investment information to the n-th specific past investment information. Further, said other past investment information may be determined by referring to at least part of the first other past investment information to the m-th other past investment information, which are in chronological order, and is correlated with the first other past weight to the m-th other past weight corresponding to the first other past investment information to the m-th other past investment information. Further, said other expected investment information is determined by referring to at least part of the first other past investment information to the m-th other past investment information and the first other past investment time information to the m-th other past investment time information corresponding to the first other past investment information to the m-th other past investment information, and is correlated with the first other past weight to the m-th other past weight corresponding to the first other past investment information to the m-th other past investment information. Since details of above were explained previously, detailed explanation thereof is omitted.

The present disclosure has an effect of determining the specific reference price for the specific unlisted stock of the specific unlisted company.

The present disclosure has another effect of allowing the limitation conditions for both the buy orders and the sell orders of the specific unlisted stock to be set by referring to the specific reference price of the specific unlisted stock.

The present disclosure has still another effect of supporting the transaction of the specific unlisted stock by acquiring said at least one specific buy order including said at least one specific desired bid price on condition that the range of desired bid prices to be included in the buy orders of the specific unlisted stock has been downwardly bounded based on the specific reference price according to the first limitation condition among the limitation conditions.

The present disclosure has still yet another effect of supporting the transaction of the specific unlisted stock by acquiring said at least one specific sell order including said at least one specific desired ask price on condition that the range of desired ask prices to be included in the sell orders of the specific unlisted stock has been upwardly bounded based on the specific reference price according to the second limitation condition among the limitation conditions.

The present disclosure has still yet another effect of displaying the specific reference price for the specific unlisted stock of the specific unlisted company in a first region of a screen of a user device.

The present disclosure has still yet another effect of displaying, in a second region of the screen of the user device, the specific buy order including the specific desired bid price on condition that the range of desired bid prices to be included in the buy orders of the specific unlisted stock has been downwardly bounded based on the specific reference price according to the first limitation condition.

The present disclosure has still yet another effect of displaying, in a third region of the screen of the user device, the specific sell order including the specific desired ask price on condition that the range of the desired ask prices to be included in the sell orders of the specific unlisted stock has been upwardly bounded based on the specific reference price according to the second limitation condition.

Besides, the embodiments of the present disclosure as explained above can be implemented in a form of executable program command through a variety of computer means recordable to computer readable media. The computer readable media may include solely or in combination, program commands, data files, and data structures. The program commands recorded to the media may be components specially designed for the present disclosure or may be usable to a skilled human in a field of computer software. Computer readable media include magnetic media such as hard disk, floppy disk, and magnetic tape, optical media such as CD-ROM and DVD, magneto-optical media such as floptical disk and hardware devices such as ROM, RAM, and flash memory specially designed to store and carry out program commands. Program commands may include not only a machine language code made by a complier but also a high level code that can be used by an interpreter etc., which is executed by a computer. The aforementioned hardware device can work as more than a software module to perform the action of the present disclosure and they can do the same in the opposite case.

As seen above, the present disclosure has been explained by specific matters such as detailed components, limited embodiments, and drawings. They have been provided only to help more general understanding of the present disclosure. It, however, will be understood by those skilled in the art that various changes and modification may be made from the description without departing from the spirit and scope of the disclosure as defined in the following claims.

Accordingly, the thought of the present disclosure must not be confined to the explained embodiments, and the following patent claims as well as everything including variations equal or equivalent to the patent claims pertain to the category of the thought of the present disclosure.

## Claims

1. A method of supporting a transaction of unlisted stocks, comprising steps of:
(a) determining, by an unlisted stock transaction server, a specific reference price of a specific unlisted stock of a specific unlisted company;
(b) setting, by the unlisted stock transaction server, limitation conditions for both buy orders and sell orders corresponding to the specific unlisted stock by referring to the specific reference price of the specific unlisted stock; and
(c) (i) on condition that a range of desired bid prices to be included in the buy orders of the specific unlisted stock has been downwardly bounded based on the specific reference price according to a first limitation condition among the limitation conditions, acquiring, by the unlisted stock transaction server, at least one specific buy order including at least one specific desired bid price and (ii) on condition that a range of desired ask prices to be included in the sell orders of the specific unlisted stock has been upwardly bounded based on the specific reference price according to a second limitation condition among the limitation conditions, acquiring, by the unlisted stock transaction server, at least one specific sell order including at least one specific desired ask price.

2. The method of claim 1, wherein, at the step of (a), the specific reference price is determined by referring to at least part of (i) specific past investment information which includes one or more investments received by the specific unlisted company, (ii) specific expected investment information which includes one or more investments expected to be received by the specific unlisted company, (iii) other past investment information which includes one or more investments received by one or more other unlisted companies in a same industry as the specific unlisted company, (iv) other expected investment information which includes one or more investments expected to be received by the one or more other unlisted companies in the same industry as the specific unlisted company, (v) market capitalization of one or more other listed companies in the same industry as the specific unlisted company, and (vi) a specific company evaluation result of the specific unlisted company conducted by an accounting firm or gathered based on a guideline provided by a government body.

3. The method of claim 2, wherein, at the step of (a), the specific past investment information is determined by referring to at least part of first specific past investment information to n-th specific past investment information, and is correlated with a first specific past weight to an n-th specific past weight corresponding to the first specific past investment information to the n-th specific past investment information,
wherein the specific expected investment information is determined by referring to at least part of the first specific past investment information to the n-th specific past investment information and first specific past investment time information to n-th specific past investment time information corresponding to the first specific past investment information to the n-th specific past investment information, and is correlated with the first specific past weight to the n-th specific past weight corresponding to the first specific past investment information to the n-th specific past investment information,
wherein said other past investment information is determined by referring to at least part of first other past investment information to m-th other past investment information, which are in chronological order, and is correlated with a first other past weight to an m-th other past weight corresponding to the first other past investment information to the m-th other past investment information, and
wherein said other expected investment information is determined by referring to at least part of the first other past investment information to the m-th other past investment information and first other past investment time information to m-th other past investment time information corresponding to the first other past investment information to the m-th other past investment information, and is correlated with the first other past weight to the m-th other past weight corresponding to the first other past investment information to the m-th other past investment information.

4. The method of claim 1, wherein, at the step of (c), the specific unlisted stock is allowed to be transacted by matching at least part of a specific desired bid quantity included in the specific buy order with at least part of a specific desired ask quantity included in the specific sell order,
wherein, in case the specific unlisted stock is allowed to be transacted under a first mode which does not require a quantity match between the specific desired bid quantity and the specific desired ask quantity, the unlisted stock transaction server operates under one of a (1_1)-st mode in which the specific sell order is acquired while only the specific buy order exists, a (1_2)-nd mode in which the specific buy order is acquired while only the specific sell order exists, and a (1_3)-rd mode in which none of the specific buy order and the specific sell order is acquired,
wherein, (i) in the (1_1)-st mode, (i-1) in response to the specific desired bid quantity being greater than the specific desired ask quantity, a transaction of the specific desired ask quantity is allowed to be executed and information on the specific buy order is updated to be a (1_1_A)-th quantity which is acquired by subtracting the specific desired ask quantity from the specific desired bid quantity, and then the (1_1)-st mode is maintained, and (i-2) in response to the specific desired ask quantity being greater than the specific desired bid quantity, a transaction of the specific desired bid quantity is allowed to be executed and information on the specific sell order is updated to be a (1_1_B)-th quantity which is acquired by subtracting the specific desired bid quantity from the specific desired ask quantity, and then the (1_1)-st mode is switched to the (1_2)-nd mode, (ii) in the (1_2)-nd mode, (ii-1) in response to the specific desired ask quantity being greater than the specific desired bid quantity, a transaction of the specific desired bid quantity is allowed to be executed and information on the specific sell order is updated to be a (1_2_A)-th quantity which is acquired by subtracting the specific desired bid quantity from the specific desired ask quantity, and then the (1_2)-nd mode is maintained, and (ii-2) in response to the specific desired bid quantity being greater than the specific desired ask quantity, a transaction of the specific desired ask quantity is allowed to be executed and information on the specific buy order is updated to be a (1_2_B)-th quantity which is acquired by subtracting the specific desired ask quantity from the specific desired bid quantity, and then the (1_2)-nd mode is switched to the (1_1)-st mode, and (iii) in the (1_3)-rd mode, in response to acquiring the specific buy order, the (1_3)-rd mode is switched to the (1_1)-st mode, and in response to acquiring the specific sell order, the (1_3)-rd mode is switched to the (1_2)-nd mode.

5. The method of claim 1, wherein, at the step of (c), the specific buy order includes at least part of a first specific buy order to an n-th specific buy order, and the specific sell order includes at least part of a first specific sell order to an m-th specific sell order,
wherein the specific unlisted stock is allowed to be transacted by matching at least part of a first specific desired bid quantity to an n-th specific desired bid quantity included in the first specific buy order to the n-th specific buy order with at least part of a first specific desired ask quantity to an m-th specific desired ask quantity included in the first specific sell order to the m-th specific sell order,
wherein, in case the specific unlisted stock is allowed to be transacted under a second mode which requires a quantity match between at least part of the first specific desired bid quantity to the n-th specific desired bid quantity and at least part of the first specific desired ask quantity to the m-th specific desired ask quantity, the unlisted stock transaction server operates under one of a (2_1)-st mode in which the specific sell order is acquired while only the specific buy order exists, a (2_2)-nd mode in which the specific buy order is acquired while only the specific sell order exists, a (2_3)-rd mode in which both the specific sell order and the specific buy order are acquired, and a (2_4)-th mode in which none of the specific buy order and the specific sell order are acquired,
wherein, (i) in the (2_1)-st mode, on condition that the first specific buy order to the n-th specific buy order exist, in response to acquiring a k-th specific sell order including a k-th specific desired ask quantity, wherein k is an integer greater than or equal to 1 and less than or equal to n, (i-1) in case a quantity match of the k-th specific desired ask quantity exists among the first specific desired bid quantity to the n-th specific desired bid quantity, a transaction of the k-th specific desired ask quantity is allowed to be executed, and then in case a (2_1)-st quantity which is acquired by subtracting the k-th specific desired ask quantity from a sum of the first specific desired bid quantity to the n-th specific desired bid quantity is greater than 0, the (2_1)-st mode is maintained, and in case the (2_1)-st quantity is equal to 0, the (2_1)-st mode is switched to the (2_4)-th mode, (i-2) in response to a quantity match of the k-th specific desired ask quantity not existing among the first specific desired bid quantity to the n-th specific desired bid quantity, the (2_1)-st mode is switched to the (2_3)-rd mode without allowing any transaction between the first specific buy order to the n-th specific buy order and the k-th specific sell order to be executed, (ii) in the (2_2)-nd mode, on condition that the first specific sell order to the m-th specific sell order exist, in response to acquiring a k-th specific buy order including a k-th specific desired bid quantity, wherein k is an integer greater than or equal to 1 and less than or equal to m, (ii-1) in case a quantity match of the k-th specific desired bid quantity exists among the first specific desired ask quantity to the m-th specific desired ask quantity, a transaction of the k-th specific desired bid quantity is allowed to be executed, and then in case a (2_2)-nd quantity which is acquired by subtracting the k-th specific desired bid quantity from a sum of the first specific desired sell quantity to the n-th specific desired sell quantity is greater than 0, the (2_2)-nd mode is maintained, and in case the (2_2)-nd quantity is equal to 0, the (2_2)-nd mode is switched to the (2_4)-th mode, and (ii-2) in case a quantity match of the k-th specific desired bid quantity does not exist among the first specific desired sell quantity to the n-th specific desired sell quantity, the (2_2)-nd mode is switched to the (2_3)-rd mode without allowing any transaction between the first specific sell order to the m-th specific sell order and the k-th specific buy order to be executed, (iii) in the (2_3)-rd mode, (iii-1) in case a partial quantity match between one of the first specific desired ask quantity to the m-th specific desired ask quantity and one of the first specific desired bid quantity and the n-th specific desired bid quantity exists, the (2_3)-rd mode is maintained, and (iii-2) in case a quantity match between all the first specific desired ask quantity to the m-th specific desired ask quantity and all the first specific desired bid quantity and the n-th specific desired bid quantity exists, the (2_3)-rd mode is switched to the (2_4)-th mode, and (iv) in the (2_4)-th mode, in response to acquiring the k-th specific buy order, the (2_4)-th mode is switched to the (2_1)-st mode and in response to acquiring the k-th specific sell order, the (2_4)-th mode is switched to the (2_2)-nd mode.

6. The method of claim 1, wherein, at the step of (c), in response to acquiring the specific buy order from a buyer device, the unlisted stock transaction server requests the buyer device to deposit a deposit amount calculated by multiplying specific desired bid quantity included in the specific buy order with the specific reference price into an escrow account, and in response to detecting that the deposit amount is deposited into the escrow account, the unlisted stock transaction server registers the specific buy order.

7. The method of claim 6, wherein, at the step of (c), in response to acquiring the specific sell order from a seller device and determining that the specific buy order and the specific sell order match with each other, the unlisted stock transaction server transfers the deposit amount deposited into the escrow account to a seller account interworked with the seller device, and changes an ownership of the specific unlisted stock to the seller, to thereby support the transaction of the specific unlisted stock.

8. The method of claim 1, wherein, at the step of (c), in response to acquiring the specific buy order from a buyer device, the unlisted stock transaction server suspends withdrawal of a buyer account for an ordered amount calculated by multiplying the specific desired bid quantity included in the specific buy order with the specific reference price, and wherein, in response to acquiring the specific sell order from a seller device and determining that the specific sell order matches with the specific buy order, the unlisted stock transaction server transfers the ordered amount that was suspended from withdrawal to a seller account interworked with the seller device and changes an ownership of the specific unlisted stock to the buyer, to thereby support the transaction of the specific unlisted stock.

9. The method of claim 1, wherein, at the step of (c), in response to acquiring the specific sell order from a seller device, the unlisted stock transaction server requests the seller device to confirm that a specific desired ask quantity, included in the specific sell order, of the specific unlisted stock actually exists, and in response to confirming that the specific desired ask quantity of the specific unlisted stock exists, the unlisted stock transaction server registers the sell order.

10. The method of claim 9, wherein, at the step of (c), in response to acquiring the specific sell order from the seller device, the unlisted stock transaction server confirms that the specific desired ask quantity, included in the specific sell order, of the specific unlisted stock actually exists, and the unlisted stock transaction server blocks any transaction of the specific desired ask quantity of the specific unlisted stock until a transaction is executed by a match between the specific sell order and the specific buy order or until a cancellation of the specific sell order.

11. The method of claim 1, wherein, at the step of (c), the unlisted stock transaction server supports the transaction of the specific unlisted stock by performing processes of: (i) on condition that a minimum value of the range of the desired bid prices to be included in the buy orders of the specific unlisted stock is downwardly bounded based on a first specific adjusted reference price which is calculated by multiplying the specific reference price with a first adjustment factor according to the first limitation condition, acquiring the specific buy order including the specific desired bid price and (ii) on condition that a maximum value of the range of the desired ask prices to be included in the sell orders of the specific unlisted stock is upwardly bounded based on a second specific adjusted reference price which is calculated by multiplying the specific reference price with a second adjustment factor, according to the second limitation condition, acquiring the specific sell order including the specific desired ask price.

12. The method of claim 11, wherein, at the step of (b), on condition that at least one of the first adjustment factor and the second adjustment factor is set as 1.0, the unlisted stock transaction server sets the first limitation condition and the second limitation condition.

13. An unlisted stock transaction server for supporting a transaction of unlisted stocks, comprising:
at least one memory that stores instructions; and
at least one processor configured to execute the instructions to perform processes of (I) determining a specific reference price of a specific unlisted stock of a specific unlisted company; (II) setting limitation conditions for both buy orders and sell orders corresponding to the specific unlisted stock by referring to the specific reference price of the specific unlisted stock; and (III) (i) on condition that a range of desired bid prices to be included in the buy orders of the specific unlisted stock has been downwardly bounded based on the specific reference price according to a first limitation condition among the limitation conditions, acquiring at least one specific buy order including at least one specific desired bid price and (ii) on condition that a range of desired ask prices to be included in the sell orders of the specific unlisted stock has been upwardly bounded based on the specific reference price according to a second limitation condition among the limitation conditions, acquiring at least one specific sell order including at least one specific desired ask price.

14. The unlisted stock transaction server of claim 13, wherein, at the process of (I), the specific reference price is determined by referring to at least part of (i) specific past investment information which includes one or more investments received by the specific unlisted company, (ii) specific expected investment information which includes one or more investments expected to be received by the specific unlisted company, (iii) other past investment information which includes one or more investments received by one or more other unlisted companies in a same industry as the specific unlisted company, (iv) other expected investment information which includes one or more investments expected to be received by the one or more other unlisted companies in the same industry as the specific unlisted company, (v) market capitalization of one or more other listed companies in the same industry as the specific unlisted company, and (vi) a specific company evaluation result of the specific unlisted company conducted by an accounting firm or gathered based on a guideline provided by a government body.

15. The unlisted stock transaction server of claim 14, wherein, at the process of (I), the specific past investment information is determined by referring to at least part of first specific past investment information to n-th specific past investment information, and is correlated with a first specific past weight to an n-th specific past weight corresponding to the first specific past investment information to the n-th specific past investment information, wherein the specific expected investment information is determined by referring to at least part of the first specific past investment information to the n-th specific past investment information and first specific past investment time information to n-th specific past investment time information corresponding to the first specific past investment information to the n-th specific past investment information, and is correlated with the first specific past weight to the n-th specific past weight corresponding to the first specific past investment information to the n-th specific past investment information, wherein said other past investment information is determined by referring to at least part of first other past investment information to m-th other past investment information, which are in chronological order, and is correlated with a first other past weight to an m-th other past weight corresponding to the first other past investment information to the m-th other past investment information, and wherein said other expected investment information is determined by referring to at least part of the first other past investment information to the m-th other past investment information and first other past investment time information to m-th other past investment time information corresponding to the first other past investment information to the m-th other past investment information, and is correlated with the first other past weight to the m-th other past weight corresponding to the first other past investment information to the m-th other past investment information.

16. The unlisted stock transaction server of claim 13, wherein, at the process of (III), the specific unlisted stock is allowed to be transacted by matching at least part of a specific desired bid quantity included in the specific buy order with at least part of a specific desired ask quantity included in the specific sell order, wherein, in case the specific unlisted stock is allowed to be transacted under a first mode which does not require a quantity match between the specific desired bid quantity and the specific desired ask quantity, the processor operates under one of a (1_1)-st mode in which the specific sell order is acquired while only the specific buy order exists, a (1_2)-nd mode in which the specific buy order is acquired while only the specific sell order exists, and a (1_3)-rd mode in which none of the specific buy order and the specific sell order is acquired, wherein, (i) in the (1_1)-st mode, (i-1) in response to the specific desired bid quantity being greater than the specific desired ask quantity, a transaction of the specific desired ask quantity is allowed to be executed and information on the specific buy order is updated to be a (1_1_A)-th quantity which is acquired by subtracting the specific desired ask quantity from the specific desired bid quantity, and then the (1_1)-st mode is maintained, and (i-2) in response to the specific desired ask quantity being greater than the specific desired bid quantity, a transaction of the specific desired bid quantity is allowed to be executed and information on the specific sell order is updated to be a (1_1_B)-th quantity which is acquired by subtracting the specific desired bid quantity from the specific desired ask quantity, and then the (1_1)-st mode is switched to the (1_2)-nd mode, (ii) in the (1_2)-nd mode, (ii-1) in response to the specific desired ask quantity being greater than the specific desired bid quantity, a transaction of the specific desired bid quantity is allowed to be executed and information on the specific sell order is updated to be a (1_2_A)-th quantity which is acquired by subtracting the specific desired bid quantity from the specific desired ask quantity, and then the (1_2)-nd mode is maintained, and (ii-2) in response to the specific desired bid quantity being greater than the specific desired ask quantity, a transaction of the specific desired ask quantity is allowed to be executed and information on the specific buy order is updated to be a (1_2_B)-th quantity which is acquired by subtracting the specific desired ask quantity from the specific desired bid quantity, and then the (1_2)-nd mode is switched to the (1_1)-st mode, and (iii) in the (1_3)-rd mode, in response to acquiring the specific buy order, the (1_3)-rd mode is switched to the (1_1)-st mode, and in response to acquiring the specific sell order, the (1_3)-rd mode is switched to the (1_2)-nd mode.

17. The unlisted stock transaction server of claim 13, wherein, at the process of (III), the specific buy order includes at least part of a first specific buy order to an n-th specific buy order, and the specific sell order includes at least part of a first specific sell order to an m-th specific sell order, wherein the specific unlisted stock is allowed to be transacted by matching at least part of a first specific desired bid quantity to an n-th specific desired bid quantity included in the first specific buy order to the n-th specific buy order with at least part of a first specific desired ask quantity to an m-th specific desired ask quantity included in the first specific sell order to the m-th specific sell order, wherein, in case the specific unlisted stock is allowed to be transacted under a second mode which requires a quantity match between at least part of the first specific desired bid quantity to the n-th specific desired bid quantity and at least part of the first specific desired ask quantity to the m-th specific desired ask quantity, the processor operates under one of a (2_1)-st mode in which the specific sell order is acquired while only the specific buy order exists, a (2_2)-nd mode in which the specific buy order is acquired while only the specific sell order exists, a (2_3)-rd mode in which both the specific sell order and the specific buy order are acquired, and a (2_4)-th mode in which none of the specific buy order and the specific sell order are acquired, wherein, (i) in the (2_1)-st mode, on condition that the first specific buy order to the n-th specific buy order exist, in response to acquiring a k-th specific sell order including a k-th specific desired ask quantity, wherein k is an integer greater than or equal to 1 and less than or equal to n, (i-1) in case a quantity match of the k-th specific desired ask quantity exists among the first specific desired bid quantity to the n-th specific desired bid quantity, a transaction of the k-th specific desired ask quantity is allowed to be executed, and then in case a (2_1)-st quantity which is acquired by subtracting the k-th specific desired ask quantity from a sum of the first specific desired bid quantity to the n-th specific desired bid quantity is greater than 0, the (2_1)-st mode is maintained, and in case the (2_1)-st quantity is equal to 0, the (2_1)-st mode is switched to the (2_4)-th mode, (i-2) in response to a quantity match of the k-th specific desired ask quantity not existing among the first specific desired bid quantity to the n-th specific desired bid quantity, the (2_1)-st mode is switched to the (2_3)-rd mode without allowing any transaction between the first specific buy order to the n-th specific buy order and the k-th specific sell order to be executed, (ii) in the (2_2)-nd mode, on condition that the first specific sell order to the m-th specific sell order exist, in response to acquiring a k-th specific buy order including a k-th specific desired bid quantity, wherein k is an integer greater than or equal to 1 and less than or equal to m, (ii-1) in case a quantity match of the k-th specific desired bid quantity exists among the first specific desired ask quantity to the m-th specific desired ask quantity, a transaction of the k-th specific desired bid quantity is allowed to be executed, and then in case a (2_2)-nd quantity which is acquired by subtracting the k-th specific desired bid quantity from a sum of the first specific desired sell quantity to the n-th specific desired sell quantity is greater than 0, the (2_2)-nd mode is maintained, and in case the (2_2)-nd quantity is equal to 0, the (2_2)-nd mode is switched to the (2_4)-th mode, and (ii-2) in case a quantity match of the k-th specific desired bid quantity does not exist among the first specific desired sell quantity to the n-th specific desired sell quantity, the (2_2)-nd mode is switched to the (2_3)-rd mode without allowing any transaction between the first specific sell order to the m-th specific sell order and the k-th specific buy order to be executed, (iii) in the (2_3)-rd mode, (iii-1) in case a partial quantity match between one of the first specific desired ask quantity to the m-th specific desired ask quantity and one of the first specific desired bid quantity and the n-th specific desired bid quantity exists, the (2_3)-rd mode is maintained, and (iii-2) in case a quantity match between all the first specific desired ask quantity to the m-th specific desired ask quantity and all the first specific desired bid quantity and the n-th specific desired bid quantity exists, the (2_3)-rd mode is switched to the (2_4)-th mode, and (iv) in the (2_4)-th mode, in response to acquiring the k-th specific buy order, the (2_4)-th mode is switched to the (2_1)-st mode and in response to acquiring the k-th specific sell order, the (2_4)-th mode is switched to the (2_2)-nd mode.

18. The unlisted stock transaction server of claim 13, wherein, at the process of (III), in response to acquiring the specific buy order from a buyer device, the processor requests the buyer device to deposit a deposit amount calculated by multiplying specific desired bid quantity included in the specific buy order with the specific reference price into an escrow account, and in response to detecting that the deposit amount is deposited into the escrow account, the processor registers the specific buy order.

19. The unlisted stock transaction server of claim 18, wherein, at the process of (III), in response to acquiring the specific sell order from a seller device and determining that the specific buy order and the specific sell order match with each other, the processor transfers the deposit amount deposited into the escrow account to a seller account interworked with the seller device, and changes an ownership of the specific unlisted stock to the seller, to thereby support the transaction of the specific unlisted stock.

20. The unlisted stock transaction server of claim 13, wherein, at the process of (III), in response to acquiring the specific buy order from a buyer device, the processor suspends withdrawal of a buyer account for an ordered amount calculated by multiplying the specific desired bid quantity included in the specific buy order with the specific reference price, and wherein, in response to acquiring the specific sell order from a seller device and determining that the specific sell order matches with the specific buy order, the processor transfers the ordered amount that was suspended from withdrawal to a seller account interworked with the seller device and changes an ownership of the specific unlisted stock to the buyer, to thereby support the transaction of the specific unlisted stock.

21. The unlisted stock transaction server of claim 13, wherein, at the process of (III), in response to acquiring the specific sell order from a seller device, the processor requests the seller device to confirm that a specific desired ask quantity, included in the specific sell order, of the specific unlisted stock actually exists, and in response to confirming that the specific desired ask quantity of the specific unlisted stock exists, the processor registers the sell order.

22. The method of claim 21, wherein, at the process of (III), in response to acquiring the specific sell order from the seller device, the processor confirms that the specific desired ask quantity, included in the specific sell order, of the specific unlisted stock actually exists, and the processor blocks any transaction of the specific desired ask quantity of the specific unlisted stock until a transaction is executed by a match between the specific sell order and the specific buy order or until a cancellation of the specific sell order.

23. The unlisted stock transaction server of claim 13, wherein, at the process of (III), the processor supports the transaction of the specific unlisted stock by performing processes of: (i) on condition that a minimum value of the range of the desired bid prices to be included in the buy orders of the specific unlisted stock is downwardly bounded based on a first specific adjusted reference price which is calculated by multiplying the specific reference price with a first adjustment factor according to the first limitation condition, acquiring the specific buy order including the specific desired bid price and (ii) on condition that a maximum value of the range of the desired ask prices to be included in the sell orders of the specific unlisted stock is upwardly bounded based on a second specific adjusted reference price which is calculated by multiplying the specific reference price with a second adjustment factor, according to the second limitation condition, acquiring the specific sell order including the specific desired ask price.

24. The unlisted stock transaction server of claim 13, wherein, at the process of (II), on condition that at least one of the first adjustment factor and the second adjustment factor is set as 1.0, the processor sets the first limitation condition and the second limitation condition.
